# EUROPÄISCHE PATENTANMELDUNG

(11) **EP 4 454 810 A1**
(43) Veröffentlichungstag der Anmeldung: **30.10.2024**
(21) Anmeldenummer: 24167935.6
(22) Anmeldetag: 29.03.2024
(51) Int. Cl.: B24B 13/005

(54) **AUFNAHME FÜR DIE BEARBEITUNG VON OPTISCHEN WERKSTÜCKEN, INSBESONDERE BRILLENLINSEN**

(30) Priorität: 20.04.2023 DE 102023110130
(71) Anmelder: Satisloh AG, 6340 Baar (CH)
(72) Erfinder: Schäfer, Holger, D-35789 Weilmünster (DE); Lautz, Martin, D-35580 Nauborn (DE); Claar, Johannes, D-35085 Ebsdorfergrund (DE); Wortmann, Janis, D-82405 Wessobrunn (DE)
(74) Vertreter: Oppermann, Mark

(57) **Zusammenfassung**

Eine Aufnahme (10) für die Bearbeitung von insbesondere Brillenlinsen (14) als Werkstücken umfasst ein Gehäuse (26) mit einer Halteanordnung (22) für ein zu bearbeitendes Werkstück sowie einer Abstützanordnung (24) hierfür, die eine Vielzahl von in einer vom Gehäuse begrenzten Kammer (28) aufgenommenen längsverschiebbaren Stiften (38) aufweist. Letztere sind wahlweise gegen eine Längsverschiebung bezüglich des Gehäuses durch einen Klemmmechanismus (40) festlegbar und dienen mit ihren Stiftenden (42) dazu, das mit einer seiner Werkstückflächen über die Halteanordnung an der Aufnahme gehaltene Werkstück an der den Stiftenden zugewandten Werkstückfläche nach Maßgabe deren Geometrie flächig und fest abzustützen. Der Klemmmechanismus hat wenigstens ein Kraftübertragungselement (44), das durch fluidisch aufbringbare Kräfte bezüglich der Stifte bewegbar ist, um die Stifte wahlweise in einem unbetätigten, d.h. passiven Zustand der Aufnahme zu klemmen oder in einem betätigten, d.h. aktiven Zustand der Aufnahme freizugeben.

## Beschreibung

### TECHNISCHES GEBIET

Die vorliegende Erfindung bezieht sich allgemein auf eine Aufnahme für die Bearbeitung von optischen Werkstücken. Insbesondere bezieht sich die Erfindung auf eine Aufnahme zur Bearbeitung von Brillenlinsen, vorzugsweise Brillenlinsen aus Kunststoff, wie etwa Polycarbonat, CR39 oder sogenannten "High Index" Materialien, grundsätzlich aber auch für Brillenlinsen aus sprödharten Materialien, wie z.B. Mineralglas. Derartige Brillenlinsen werden in sogenannten "RX-Werkstätten", d.h. Produktionsstätten zur Fertigung von individuellen Brillenlinsen nach Rezept in sehr großem Umfang hergestellt.

Die hier beschriebene Aufnahme bildet die in der älteren deutschen Patentanmeldung DE 10 2021 005 202.1 (DE 10 2021 005 202 A1) derselben Anmelderin beschriebene Aufnahme weiter und eignet sich beispielsweise sehr gut für den Einsatz in einem Verfahren zur spanenden (Flächen)Bearbeitung von insbesondere Brillenlinsen aus Kunststoff, wie es in der Druckschrift DE 10 2021 004 831 A1 beschrieben ist. An der hier beschriebenen Aufnahme kann ferner speziell eine elastische Membran zum Einsatz kommen, wie sie Gegenstand der zeitgleich unter dem Titel "Elastische Membran für eine Aufnahme zur Bearbeitung von optischen Werkstücken, insbesondere Brillenlinsen, und damit ausgestattete Aufnahme" eingereichten deutschen Patentanmeldung DE 10 2023 110 129.3 derselben Anmelderin ist. Auf die vorerwähnten Unterlagen (DE 10 2021 005 202 A1, DE 10 2021 004 831 A1, DE 10 2023 110 129.3) wird an dieser Stelle bezüglich weiterer struktureller Details der Aufnahme bzw. der elastischen Membran sowie den Einsatz- und Verfahrensdetails ausdrücklich Bezug genommen.

### STAND DER TECHNIK

In der oben erwähnten Druckschrift DE 10 2021 004 831 A1 wird bereits ausführlich beschrieben, welche Prozessschritte derzeit regelmäßig in RX-Werkstätten bei der industriellen Fertigung von Brillenlinsen durchlaufen werden, so dass das übliche Vorgehen an dieser Stelle nur kurz umrissen werden soll. Ausgangsprodukt bei der industriellen Fertigung von Brillenlinsen ist ein halbfertiger Brillenlinsenrohling, auch "Blank" genannt, der eine bereits fertigbearbeitete, spritzgusstechnisch vorbereitete oder auf andere Weise vorgeformte optisch wirksame Fläche aufweist und an seiner anderen optisch wirksamen Fläche und dem Rand zwischen den optischen wirksamen Flächen zu einer fertigen Brillenlinse zu bearbeiten ist.

Nach einem Schutz der vorgeformten optisch wirksamen Fläche mittels einer Schutzfolie oder eines Schutzlacks erfolgt das sogenannte "Blocken" des jeweiligen Brillenlinsenrohlings, der dabei mit einem geeigneten, sogenannten "Blockstück", z.B. einem Blockstück gemäß der deutschen Norm DIN 58766 verbunden wird. Beim Blocken werden zuerst Position und ggf. Form des Brillenlinsenrohlings messtechnisch bestimmt, bevor der Brillenlinsenrohling dann in sechs Freiheitsgraden relativ zu dem Blockstück positioniert wird, so dass das Blockstück eine vorgegebene Position gegenüber der geschützten, vorgeformten Fläche des Brillenlinsenrohlings einnimmt. Anschließend erfolgt die Fixierung dieser eingestellten Position durch Auffüllen des Raums zwischen Blockstück und Brillenlinsenrohling mit einem herkömmlichen geschmolzenen Material ("Alloy" oder Wachs, siehe z.B. EP 1 593 458 A2) oder alternativ mittels eines geeigneten thermoplastischen, duroplastischen oder elastomeren Kunststoffs oder Klebstoffs (siehe z.B. DE 10 2007 007 161 A1, EP 2 011 604 A1, WO 2009/135689 A1). Nach Erstarren bzw. Aushärten des Füllmaterials stellt das Blockstück eine Aufnahme oder Maschinenschnittstelle zur Bearbeitung des Brillenlinsenrohlings dar, die nachfolgend bei mehreren Bearbeitungsvorgängen in verschiedenen Maschinen an der Brillenlinse verbleibt, um Letztere dabei drehend antreiben zu können und in stets definierter Lage zuverlässig zu halten.

Im nächsten Schritt, dem sogenannten "Generieren", erhält die vorher noch nicht bearbeitete optisch wirksame Fläche des jeweiligen Brillenlinsenrohlings in einer speziellen Bearbeitungsmaschine, auch "Generator" genannt (siehe z.B. EP 1 719 585 A2, EP 2 011 603 A1), durch spanende (Vor)Bearbeitung - bei Kunststoff i.d.R. Fräsen und/oder Drehen mit geometrisch bestimmter Schneide - ihre Makrogeometrie, d.h. die optisch aktive Form gemäß Rezept. Dabei wird der geblockte Brillenlinsenrohling mittels des Blockstücks an einer drehend angetriebenen Werkstückspindel gehalten. Das Generieren umfasst regelmäßig wenigstens zwei Teilschritte (siehe z.B. EP 1 203 626 B1), nämlich eine Randvorbearbeitung, auch Vorranden oder "Cribbing" genannt, bei welcher der Rand des Brillenlinsenrohlings vom sogenannten "Rohdurchmesser" auf den sogenannten "Fertigdurchmesser" bearbeitet wird - bei Kunststoff etwa mittels eines Tellerfräsers (vgl. z.B. EP 0 758 571 B1) - und eine sich daran anschließende Flächenbearbeitung. Letztere kann bei Kunststoff mit (wenigstens) einem Fräsergang über die Fläche beginnen, wonach die Hauptmenge des zu entfernenden Rohlingsmaterials bereits abgetragen ist, gefolgt zumeist von einer "unrunden" Drehbearbeitung unter Zuhilfenahme einer sogenannten "Fast-Tool"-Anordnung (siehe z.B. EP 1 779 967 A2) zum reziprozierenden Antrieb einer Diamant-Drehschneide, um (auch) nichtrotationssymmetrische Flächenabschnitte - z.B. Freiformflächen bei Gleitsichtbrillen - am Halbzeug anzuarbeiten. Voraussetzung für die angesprochene Randvorbearbeitung mittels Fräser ist, dass das an der Frontseite des Brillenlinsenrohlings temporär angebrachte Blockstück einen maximalen Durchmesser kleiner dem Fertigdurchmesser des Werkstücks aufweist, da es ansonsten zu einer Kollision zwischen Fräswerkzeug und Blockstück kommen würde.

Sodann erfolgt die allgemein als "Polieren" bezeichnete (mikro) spanende Feinbearbeitung der Brillenlinsen, bei der die vorbearbeitete optisch wirksame Fläche des jeweiligen Halbzeugs die gewünschte Mikrogeometrie (Oberflächengüte) erhält, und zwar mittels geometrisch unbestimmter Schneide. Hierfür wird das spanend vorbearbeitete, geblockte Halbzeug aus dem Generator entnommen und in einer Feinbearbeitungs- bzw. Poliermaschine weiterbearbeitet (siehe beispielsweise EP 2 308 644 A2). Dabei erfolgt die Positionierung und Fixierung des Halbzeugs in der Poliermaschine ebenfalls mittels des Blockstücks (siehe z.B. EP 1 473 116 A1). Bei der Polierbearbeitung wird unter Zugabe eines flüssigen, mit abrasiven Partikeln versehenen Poliermittels vermittels eines flexiblen Polierwerkzeugs bzw. -tellers (siehe etwa EP 1 698 432 A2, WO 2016/058661 A1) in definierten Bahnen über die vorbearbeitete Fläche gefahren, um die Oberflächenrauigkeit zu verringern.

Als nächster optionaler Prozessschritt erfolgt das Markieren des Halbzeugs, wobei etwa mittels eines Laserstrahls oder mechanisch mittels eines Gravierstichels (siehe z.B. EP 1 916 060 B1) beispielsweise zwei kleine Kreise auf der rückseitigen Fläche des Halbzeugs erzeugt werden. Dies ist etwa bei Freiformflächen notwendig, um über die eingebrachten Markierungen die Lage des Halbzeugs in späteren Prozessschritten sicher zu finden. Da hier eine hohe Genauigkeit in der Positionierung gefordert ist, erfolgt auch beim Markieren die Positionierung und Fixierung vermittels des Blockstücks.

Erst nach dieser Bearbeitung wird das Halbzeug vom Blockstück getrennt. Das sogenannte "Abblocken" erfolgt beispielsweise im Falle der vorerwähnten Klebeverbindung mittels eines von einer Düse abgegebenen Hochdruck-Wasserstrahls, der auf einer Randstelle zwischen Blockstück und Halbzeug auftrifft, um das Halbzeug vom Blockstück durch Aufbringung hydraulischer Kräfte zu lösen (siehe z.B. WO 2011/042091 A1, WO 2011/107227 A1). In der Folge liegt nun das bearbeitete Halbzeug einzeln vor, das abgetrennte Blockstück wird gereinigt und an den Prozessschritt Blocken zurückgeführt.

In der weiteren Bearbeitung wird das Halbzeug nach Reinigung optional an seiner Front- und/oder Rückseite zur Erzielung zusätzlicher Wirkungen - Erhöhung der Kratzfestigkeit durch Hartbeschichtung, Antireflexionseigenschaften, Farbe, Verspiegelung, hydrophobe Eigenschaften, etc. - beschichtet.

Als finaler Prozessschritt wird schließlich das sogenannte "Edgen" durchgeführt, bei dem das Halbzeug am Rand zur Einpassung in ein gewünschtes Brillengestell erneut bearbeitet wird, so dass es die Form der jeweiligen Brillenfassung erhält. Da das Halbzeug nun nicht mehr auf dem Blockstück fixiert ist, muss hier die Position erneut festgestellt werden (beispielsweise anhand der vorerwähnten Markierungen), bevor das Halbzeug geeignet fixiert und in einem sogenannten "Edger" als Randbearbeitungsvorrichtung (siehe z.B. EP 1 243 380 A2) im Hinblick auf seine Randform und Befestigung im Brillengestell final bearbeitet werden kann.

Die insoweit umrissene Prozesskette aus dem Stand der Technik beinhaltet mit den Schritten "Blocken" und "Abblocken" zwei Abläufe, die notwendige Hilfsprozesse darstellen, selbst aber den Wert der hergestellten Brillenlinse nicht steigern. Wünschenswert wäre also eine Prozesskette, die ohne diese Hilfsprozesse auskommt. Insbesondere zur Effizienzsteigerung und auch aus ökologischen Erwägungen wurde im Stand der Technik bereits vorgeschlagen, bei der Herstellung der optisch wirksamen Flächen von Brillenlinsen "blocklos" zu arbeiten, wobei die Brillenlinsen bei der Bearbeitung mittels spezieller Haltevorrichtungen bzw. Aufnahmen gehalten werden (siehe z.B. WO 2015/059007 A1, US 9,969,051 B2, DE 10 2016 112 999 A1, DE 10 2004 016 445 B4).

Wie in der bereits eingangs erwähnten, älteren deutschen Patentanmeldung DE 10 2021 005 202.1 (DE 10 2021 005 202 A1) ausführlich diskutiert - worauf an dieser Stelle nochmals verwiesen sei - besteht bei den vorbekannten Haltevorrichtungen bzw. Aufnahmen allerdings die Gefahr, dass die Brillenlinsen bei bzw. während der Bearbeitung unerwünschte elastische Verformungen oder Durchbiegungen erfahren, sei es infolge nicht abgestützter Hohlräume unter der jeweiligen Linse, in die die Linse unter den wirkenden Bearbeitungskräften hinein verformt wird (WO 2015/059007 A1, US 9,969,051 B2), oder aufgrund eines mechanischen Spannens am Umfangsrand der jeweiligen Linse mit radial gerichteten Spannkräften (DE 10 2016 112 999 A1, DE 10 2004 016 445 B4). Dies kann namentlich bei der Bearbeitung im Verhältnis dünner Linsen zu nicht tolerablen Abweichungen zwischen der an der Rückfläche erzeugten Ist-Geometrie und der dort gewünschten Soll-Geometrie führen, die sich dann bemerkbar machen, wenn die Linse nach der Bearbeitung wieder "ausfedert". Solche der Bearbeitungsqualität abträglichen, haltesystembedingten Linsenverformungen sind insbesondere dann kritisch, wenn im Verhältnis komplexe Flächengeometrien, d.h. andere als bloß sphärische oder torische Flächen herzustellen sind.

Um das Werkstück bei der Werkstückbearbeitung in prozesssicherer Weise sowie ohne der Bearbeitungsqualität abträgliche Werkstückverformungen zu halten und zu unterstützen, wird in der älteren deutschen Patentanmeldung DE 10 2021 005 202.1 (DE 10 2021 005 202 A1) eine spezielle Aufnahme für die Bearbeitung von optischen Werkstücken, insbesondere Brillenlinsen, mit jeweils zwei Werkstückflächen und einem Werkstückrand dazwischen vorgeschlagen. Diese Aufnahme umfasst eine Halteanordnung für ein zu bearbeitendes Werkstück sowie eine Abstützanordnung für das zu bearbeitende Werkstück. Die Abstützanordnung hat in der hier offenbarten Ausgestaltung eine an einem Gehäuse montierte, gummielastische Membran, welche einen Aufnahmeabschnitt besitzt, auf dessen Außenseite das Werkstück mit einer seiner Werkstückflächen flächig auflegbar ist. Die Membran begrenzt zusammen mit dem Gehäuse eine Kammer, in der eine Vielzahl von separat längsverschiebbaren Stiften der Abstützanordnung aufgenommen ist, welche jeweils mit einem Stiftende an einer Innenseite des Aufnahmeabschnitts der gummielastischen Membran zur Anlage bringbar sind. Ferner sind diese Stifte wahlweise gegen eine Längsverschiebung bezüglich des Gehäuses durch einen quer wirkenden Klemmmechanismus aneinander festlegbar oder mittels eines axial wirkenden Sperrmechanismus blockierbar, um den Aufnahmeabschnitt nach Maßgabe einer Geometrie des mittels der Halteanordnung gehaltenen Werkstücks fest abzustützen. Eine Besonderheit der Aufnahme in der hier offenbarten Ausgestaltung besteht des Weiteren darin, dass die Halteanordnung für das zu bearbeitende Werkstück in oder an dem Aufnahmeabschnitt der gummielastischen Membran vorgesehen ist und das Werkstück zu halten vermag, ohne am Werkstückrand anzugreifen.

Bei dieser Lösung weist der Klemmmechanismus wenigstens ein Kraftübertragungselement auf, über das eine Klemmkraft auf die Stifte übertragbar ist, die von einer Seite des Gehäuses im Wesentlichen in Richtung einer Mittelachse des Gehäuses verläuft und senkrecht zu den Längsachsen der Stifte wirkt. Das Kraftübertragungselement ist dabei über wenigstens eine am Gehäuse montierte Stellschraube mechanisch mit der Klemmkraft beaufschlagbar. Als Alternative werden auch z.B. pneumatische, hydraulische oder elektrische Aktuatoren zur automatisierten Querkraftbeaufschlagung der Stifte erwähnt, ohne dass indes weitere Details hierzu offenbart würden.

### AUFGABENSTELLUNG

Dem insoweit geschilderten Stand der Technik gegenüber liegt der Erfindung die Aufgabe zugrunde, insbesondere für eine idealerweise gänzlich blocklos auskommende Herstellprozesskette eine Aufnahme für die Bearbeitung von optischen Werkstücken, namentlich Brillenlinsen bereitzustellen, die allgemein die oben zum Stand der Technik beschriebenen Probleme adressiert und speziell das Werkstück bei der Werkstückbearbeitung in prozesssicherer Weise sowie ohne der Bearbeitungsqualität abträgliche Werkstückverformungen zu halten und zu unterstützen vermag und sich insbesondere für den Einsatz in einem wenigstens teilweise automatisierten Fertigungsumfeld eignet.

### DARSTELLUNG DER ERFINDUNG

Diese Aufgabe wird durch eine Aufnahme für die Bearbeitung von optischen Werkstücken, insbesondere Brillenlinsen, mit den Merkmalen des Patentanspruchs 1 gelöst. Vorteilhafte oder zweckmäßige Ausgestaltungen und Weiterbildungen der Erfindung sind Gegenstand der abhängigen Patentansprüche.

Gemäß der Erfindung umfasst eine Aufnahme für die Bearbeitung von optischen Werkstücken, insbesondere Brillenlinsen, die jeweils zwei Werkstückflächen und einen Werkstückrand dazwischen aufweisen, ein Gehäuse mit einer Halteanordnung für ein zu bearbeitendes Werkstück sowie einer Abstützanordnung hierfür, die eine Vielzahl von in einer vom Gehäuse begrenzten Kammer aufgenommenen, mindestens zum Großteil separat längsverschiebbaren Stiften aufweist, welche wahlweise gegen eine Längsverschiebung bezüglich des Gehäuses durch einen Klemmmechanismus - vorzugsweise aneinander - festlegbar sind und mit ihren Stiftenden dazu dienen, das mit einer seiner Werkstückflächen über die Halteanordnung an der Aufnahme gehaltene Werkstück an der den Stiftenden zugewandten Werkstückfläche nach Maßgabe deren Geometrie flächig und fest abzustützen, wobei der Klemmmechanismus wenigstens ein Kraftübertragungselement hat, das durch fluidisch aufbringbare Kräfte bezüglich der Stifte bewegbar ist, um die Stifte wahlweise in einem unbetätigten Zustand der Aufnahme zu klemmen oder in einem betätigten Zustand der Aufnahme freizugeben.

Die erfindungsgemäße Aufnahme kombiniert verschiedene Funktionen, die für eine qualitativ hochwertige Bearbeitung von flächigen Werkstücken wesentlich sind. Flächige Werkstücke, wie etwa Brillenlinsen, zeichnen sich dadurch aus, dass sie in Breiten- und Längenrichtung deutlich größere Abmessungen besitzen als in Dickenrichtung. Diese Werkstückgeometrie hat bei einer spanenden Bearbeitung zur Folge, dass das Werkstück selbst bei insbesondere nahe am Rand des Werkstücks angreifenden, vom Werkstück weggewandten Trennkräften einen verhältnismäßig großen Hebelarm bildet, was die Gefahr birgt, dass das Werkstück bei der Zerspanung von seiner Aufnahme "heruntergehebelt" wird. Zugleich bedingt die im Verhältnis geringe Dicke des Werkstücks speziell ein eher kleines Widerstandsmoment gegen Biegung, mit der Gefahr einer (wenigstens) elastischen Verformung unter den jeweils herrschenden Bearbeitungskräften. Die sich hieraus für eine zuverlässig arbeitende und einer hohen Bearbeitungsqualität förderlichen Werkstückaufnahme ergebenden Anforderungen, nämlich das flächige Werkstück bei der Bearbeitung zum einen zuverlässig zu halten und zum anderen gegen unerwünschte Verformungen hinreichend abzustützen bzw. zu unterstützen, und das in einem wenigstens teilweise automatisierten Fertigungsumfeld, adressiert die erfindungsgemäße Aufnahme mit ihren Halte- und Abstützanordnungen auf besondere Weise.

Hierbei ermöglicht die erfindungsgemäße Ausbildung der Abstützanordnung mit einer Vielzahl von wenigstens größtenteils individuell längsverschieblichen Stiften, deren Stiftenden das mit einer seiner Werkstückflächen über die Halteanordnung an der Aufnahme gehaltene Werkstück an der den Stiftenden zugewandten Werkstückfläche nach Maßgabe deren Geometrie flächig und fest abzustützen vermögen, zunächst vorteilhaft eine sehr genaue "Abformung" der auf die Aufnahme aufgelegten Fläche des aufzunehmenden Werkstücks, bevor die Stifte mittels des Klemmmechanismus geklemmt werden, um eine feste bzw. starre Auflagefläche für das Werkstück bereitzustellen. Irgendwelche größeren Hohlräume, in die das an der Aufnahme aufgenommene Werkstück bei der Bearbeitung "hineinfedern" könnte, liegen erfindungsgemäß unter dem Werkstück also nicht vor.

Das Teilmerkmal, gemäß dem die Stifte "mindestens zum Großteil" separat längsverschiebbar sind, bedeutet in diesem Zusammenhang, dass grundsätzlich zwar sämtliche Stifte individuell längsverschiebbar sein können, aber nicht müssen. Vielmehr sollen auch Ausgestaltungen der Aufnahme nicht vom Schutz ausgeschlossen werden, bei denen z.B. drei Stifte gar nicht oder nicht im vollen Umfang längsverschieblich angeordnet sind, etwa um in diesem Beispiel eine "Dreipunktauflage" auszubilden, was die manuelle oder automatische Beladung der Aufnahme mit dem optischen Werkstück einfacher gestalten kann. Besagte drei Stifte können dann auch ein nur sehr geringes Axialspiel von beispielsweise 0,1 mm besitzen und mit allen anderen Stiften gemeinsam geklemmt werden. Außerdem können diese drei (quasi) stationären Stifte an ihren dem Werkstück zugewandten Enden insbesondere zur Vergrößerung der Auflagefläche auch einen grö-ßeren Durchmesser besitzen als die übrigen Stifte des Stiftpakets. Im Hinblick auf eine - im Rahmen eines vorgegebenen, maximalen Werkstückdurchmessers - möglichst universelle Eignung der Aufnahme für beliebige Werkstückgeometrien bzw. -krümmungen ist es allerdings bevorzugt, wenn sämtliche Stifte der Abstützanordnung im ungeklemmten Zustand längsverschiebbar angeordnet sind.

Dadurch, dass die Kräfte für die Bewegung des wenigstens einen Kraftübertragungselements des Klemmmechanismus relativ zu den Stiften, um die Stifte wie gewünscht entweder zu klemmen oder freizugeben, fluidisch aufbringbar sind, kann diese Bewegung des Weiteren auf einfache Weise "ferngesteuert" werden. So kann das Fluid z.B. über geeignete Durchführungen oder Kanäle in der Aufnahme und/oder einer die Aufnahme tragenden Werkstückspindel an den Ort des Geschehens geführt werden, anders als bei der in der älteren deutschen Patentanmeldung DE 10 2021 005 202.1 (DE 10 2021 005 202 A1) explizit offenbarten Lösung, bei der das Kraftübertragungselement über wenigstens eine am Gehäuse der Aufnahme montierte Stellschraube mechanisch mit der Klemmkraft beaufschlagbar ist, was einen an der Aufnahme seitlichen, mechanischen Eingriff bzw. Zugriff im Arbeitsraum der Bearbeitungsmaschine erfordert, in bzw. an der die Aufnahme zum Einsatz kommt.

Hierbei können die fluidisch aufbringbaren Kräfte für das wenigstens eine Kraftübertragungselement grundsätzlich dazu dienen, die Stifte zu klemmen - was nachfolgend in einer bevorzugten Ausgestaltung noch näher beschrieben wird - oder aber die Stifte freizugeben. Für den letzteren Fall ist z.B. eine Ausgestaltung des Klemmmechanismus denkbar, bei der das wenigstens eine Kraftübertragungselement, um die Stifte zu klemmen, mittels eines Federmechanismus mit einer Kraft in Richtung der Stifte beaufschlagt ist, der, um die Stifte freizugeben, eine Kraft entgegengesetzt werden kann, die fluidisch aufgebracht wird.

Unabhängig von der Wirkrichtung der fluidisch aufbringbaren Kräfte ist erfindungsgemäß bezüglich des Betriebszustands der Stifte, d.h. "geklemmt" oder "freigegeben", jedenfalls vorgesehen, dass die Stifte wahlweise im unbetätigten Zustand der Aufnahme, d.h. passiv, mittels des wenigstens einen Kraftübertragungselements des Klemmmechanismus geklemmt werden oder aber im betätigten Zustand der Aufnahme, d.h. aktiv, von dem wenigstens einen Kraftübertragungselement des Klemmmechanismus freigegeben werden. Dies ist zum einen hinsichtlich der Prozesssicherheit von Vorteil, weil z.B. während der Bearbeitung eines auf der Aufnahme gehaltenen optischen Werkstücks ein Aus- oder Wegfall der Möglichkeit, die Aufnahme zu betätigen, d.h. den Betriebszustand des Klemmmechanismus zu ändern, nicht dazu führen würde, dass das Werkstück bei der Bearbeitung plötzlich keine ausreichende Abstützung mehr erfährt. Zum anderen ist dies im Hinblick auf die Energieeffizienz vorteilhaft, weil keine äußere Energiezufuhr vonnöten ist, um bei einem Einsatz der Aufnahme den geklemmten Zustand der Stifte aufrechtzuerhalten.

In Summe prädestinieren die erfindungsgemäßen Merkmale (a) der fluidischen Kraftaufbringung zur Betätigung des Klemmmechanismus sowie (b) der passiven Klemmung und aktiven Aufhebung der Klemmung der Stifte die vorgeschlagene Aufnahme für einen Einsatz in einem wenigstens teilweise automatisierten Fertigungsumfeld bei z.B. der blocklosen Bearbeitung von Brillenlinsen, wie sie etwa in der Druckschrift DE 10 2021 004 831 A1 beschrieben ist, auf die an dieser Stelle bezüglich der Prozessdetails nochmals ausdrücklich verwiesen sei.

In einer bevorzugten Ausgestaltung der Aufnahme ist dem wenigstens einen Kraftübertragungselement ein hydraulisch beaufschlagbarer Aktuator zugeordnet, um wahlweise eine Querbewegung des Kraftübertragungselements bezüglich der Stifte zu generieren. Als Alternative hierzu ist zunächst ein pneumatisch beaufschlagbarer Aktuator zwar ebenfalls denkbar. Insbesondere im Hinblick auf eine hohe Energiedichte, eine tunlichst direkte Kraftübersetzung, möglichst kleine Wirkflächen und eine kompakte Bauweise ist eine Hydraulik demgegenüber aber bevorzugt, deren inkompressible Hydraulikflüssigkeit auch keine "federnde" Nachgiebigkeit wie bei Luft aufweist.

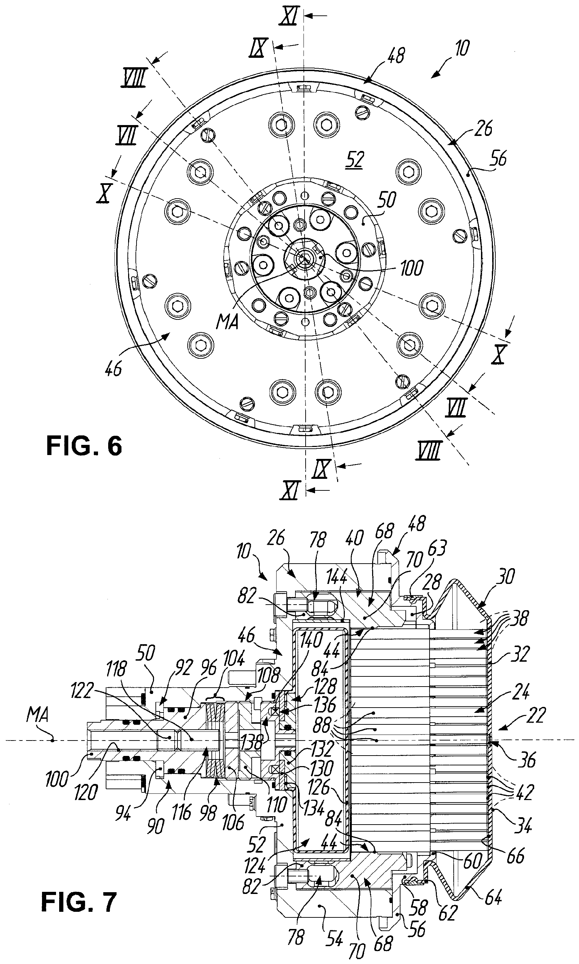

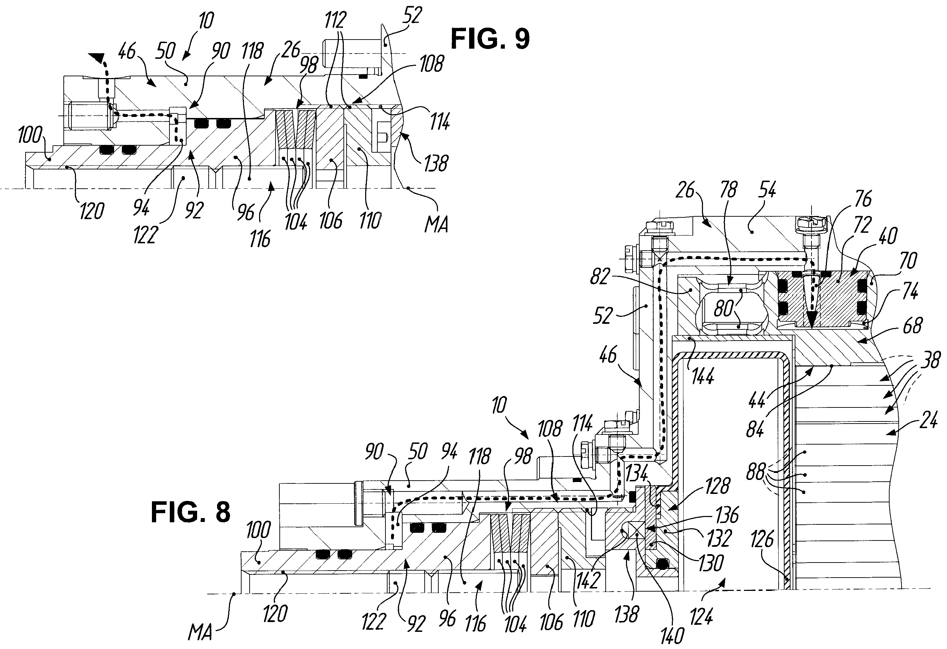

Was ferner die Bewegungsrichtung des Kraftübertragungselements bezüglich der Stifte angeht, wäre prinzipiell auch eine Längsbewegung des Kraftübertragungselements in Relation zu den Stiften möglich, beispielsweise mittels eines Klemmmechanismus, bei dem ein (oder mehrere) Keil(e) in axialer Richtung der Stifte im Zentrum des Stiftpakets zwischen die Stifte getrieben wird (werden) - ähnlich der in der Druckschrift WO 2009/135689 A1 (Fig. 7 und 8) offenbarten Keillösung. Bei der hier bevorzugten Querbewegung des Kraftübertragungselements mit Bezug auf die Stifte ist die Vollflächigkeit der Abstützung des an der Aufnahme aufgenommenen optischen Werkstücks jedoch einfacher zu erzielen.

In einer insbesondere mit Blick auf einen möglichst geringen baulichen Aufwand und Bauraumbedarf bevorzugten Ausgestaltung der Aufnahme kann das wenigstens eine Kraftübertragungselement durch hydraulische Beaufschlagung des Aktuators bezüglich des Gehäuses der Aufnahme gegen eine elastische Rückstellkraft auslenkbar sein, um die Stifte zu klemmen. Die elastische Rückstellkraft am Kraftübertragungselement sorgt dabei vorteilhaft dafür, dass es ohne hydraulische Beaufschlagung des Aktuators zu einer gewissen Freistellung der Stifte kommt, was einer möglichst leichten axialen Verschiebbarkeit der einzelnen Stifte förderlich ist. Alternativ kann die Klemmkraft aber auch mittels Federn aufgebracht und durch hydraulische Beaufschlagung eines geeignet angeordneten Aktuators gelöst/aufgehoben werden, wie weiter oben schon angedeutet, was jedoch weniger bevorzugt ist.

Grundsätzlich ist es möglich, den hydraulisch beaufschlagbaren Aktuator in der Art eines Hydrodehnspannfutters auszubilden, mit einer die Stifte umgebenden Kammeranordnung, z.B. in Form einer Ringkammer mit einem kreisring- oder mehreckringförmigen Querschnitt, welche mit der Hydraulikflüssigkeit beaufschlagbar ist, und einer die Kammeranordnung gegenüber den Stiften hydraulisch dicht begrenzende, elastisch verformbare Wand, die auf das oder als Kraftübertragungselement wirkt, welches die Stifte wahlweise klemmt, nämlich bei hydraulischer Beaufschlagung der Kammeranordnung, oder aber freigibt, und zwar bei hydraulischer Entlastung der Kammeranordnung. Auch im Hinblick auf möglichst geringe Kosten ist demgegenüber jedoch eine Ausgestaltung der Aufnahme bevorzugt, bei der der hydraulisch beaufschlagbare Aktuator durch eine Kolben-Zylinder-Anordnung mit einem Zylindergehäuse und wenigstens einem Kolben gebildet ist. Eine solche Kolben-Zylinder-Anordnung bietet, verglichen zu einem Hydrodehnspannfutter, vorteilhaft auch größere Verstellwege, so dass die einzelnen Stifte besser freigestellt bzw. sicherer freigegeben werden können.

Dabei kann die Anordnung prinzipiell so getroffen sein, dass das Zylindergehäuse der Kolben-Zylinder-Anordnung am Gehäuse der Aufnahme angebracht ist, so dass der im Zylindergehäuse aufgenommene, wenigstens eine Kolben bezüglich des Gehäuses der Aufnahme beweglich ist. Insbesondere im Hinblick auf einen möglichst kleinen Bauraumbedarf ist demgegenüber jedoch eine Ausgestaltung der Aufnahme bevorzugt, bei der der wenigstens eine Kolben der Kolben-Zylinder-Anordnung am Gehäuse der Aufnahme befestigt ist, so dass das Zylindergehäuse der Kolben-Zylinder-Anordnung relativ zum Gehäuse der Aufnahme bewegbar ist. Vorteilhaft wird so das größere Teil der Kolben-Zylinder-Anordnung bewegt, das eine breitere Krafteinleitungsfläche für das bzw. als Kraftübertragungselement bietet. Weitere Bauteile für eine möglichst breite bzw. flächige Kraftübertragung auf die Stifte sind so ggf. entbehrlich.

Vorzugsweise ist dabei der wenigstens eine Kolben der Kolben-Zylinder-Anordnung mit einem Durchgang zur hydraulischen Beaufschlagung der Kolben-Zylinder-Anordnung versehen. Vorteilhaft ist dann nur ein abzudichtender Übergang des Hydraulikwegs vom Gehäuse der Aufnahme auf den Kolben erforderlich. Alternativ kann ein solcher Durchgang allerdings auch am Zylindergehäuse ausgebildet sein, was dann jedoch eine separate, insbesondere flexible Zuleitung mit Abdichtung an beiden Enden erfordern würde und deshalb weniger bevorzugt ist.

Es ist ferner bevorzugt, wenn das Zylindergehäuse der Kolben-Zylinder-Anordnung zwei Zylinderräume aufweist, in denen jeweils ein Kolben am Umfang abgedichtet aufgenommen ist. Gegenüber einer ebenfalls denkbaren Variante mit nur einem Zylinderraum mit zugeordnetem Kolben ergibt sich so vorteilhaft insbesondere eine bessere Führung zwischen den Kolben und dem Zylindergehäuse. Außerdem lässt sich so auf einfache Weise bei einem im Verhältnis kleinen Bauraumbedarf eine möglichst große hydraulische Wirkfläche erzielen. Letzteres ginge freilich auch mit einer von einem Kreisquerschnitt abweichenden Querschnittsform des Kolbens und des zugeordneten Druckraums im Zylindergehäuse, beispielsweise eine ovale oder im Wesentlichen rechteckige Querschnittsform, was allerdings herstellungstechnisch aufwändiger und schwieriger gegeneinander abzudichten wäre.

In einer besonders bevorzugten Ausgestaltung der Aufnahme ist das Zylindergehäuse der Kolben-Zylinder-Anordnung über wenigstens ein Festkörpergelenk, das in der Art einer Parallelogrammführung einen Doppel-Arm besitzt, elastisch auslenkbar am Gehäuse der Aufnahme angebracht. Dabei kommt dem Festkörpergelenk quasi eine Doppelfunktion zu, zum einen sorgt es nämlich auf einfache Weise für eine Rückstellung des Zylindergehäuses aus einer gegenüber dem Gehäuse der Aufnahme ausgelenkten Position, zum anderen bildet es eine feste, wenngleich federnde Verbindung zum Gehäuse der Aufnahme aus. Als Alternative zu einem solchen Festkörpergelenk wäre auch eine Führung des Zylindergehäuses gegenüber dem Gehäuse der Aufnahme vorstellbar, was allerdings baulich aufwändiger und schon deshalb weniger bevorzugt ist. Ein weiterer Vorteil des Festkörpergelenks gegenüber einer Führung des Zylindergehäuses bezüglich des Gehäuses der Aufnahme besteht darin, dass das Festkörpergelenk ein Verkippen und eine damit einhergehende Schwergängigkeit bei der Bewegung des Zylindergehäuses relativ zum Gehäuse der Aufnahme verhindert.

Wiederum im Hinblick auf einen tunlichst kleinen Bauraumbedarf und eine Ausgestaltung mit möglichst wenigen Bauteilen ist es ferner bevorzugt, wenn das Kraftübertragungselement integraler Bestandteil des Zylindergehäuses ist. Alternativ kann das Kraftübertragungselement natürlich auch als separates Teil, beispielsweise durch eine Passfeder ausgebildet sein, analog der älteren deutschen Patentanmeldung DE 10 2021 005 202.1 (DE 10 2021 005 202 A1), wenngleich hier wegen des Mehraufwands weniger bevorzugt.

Vorzugsweise weist das Kraftübertragungselement des Weiteren eine ebene Anlagefläche für die Stifte auf und steht vom Zylindergehäuse in die Kammer mit den Stiften hinein vor. Prinzipiell ist es zwar auch möglich, dass das Kraftübertragungselement eine Anlagefläche für die Stifte hat, die beispielsweise um eine Achse parallel zu den Stiftachsen bezüglich der Stifte hohlzylindrisch gewölbt ist. Eine ebene Anlagefläche weist demgegenüber aber den Vorteil auf, dass eine gleichzeitige, parallele Krafteinleitung auf mehrere Stifte möglich ist, so dass die eingeleiteten Kräfte bestmöglich genutzt werden können, nämlich im Wesentlichen ohne Erzeugung von Querkraftkomponenten an den Stiften in Reaktion, die sich z.T. gegenseitig aufheben würden, wie dies etwa bei einer im obigen Sinne hohlzylindrisch gewölbten Anlagefläche der Fall wäre.

Was weiterhin die Erzeugung des hydraulischen Drucks für den dem Kraftübertragungselement zugeordneten, hydraulisch beaufschlagbaren Aktuator angeht, ist der Aktuator im unbetätigten Zustand der Aufnahme vorzugsweise über einen Druckspeicher druckbeaufschlagt, der im betätigten Zustand der Aufnahme druckentlastet ist. Grundsätzlich könnte zur Druckerzeugung zwar auch beispielsweise eine Hydraulikpumpe zum Einsatz kommen, was im Vergleich zu einem Druckspeicher im Hinblick auf die Energieeffizienz, die Ausfall- und Prozesssicherheit aber weniger bevorzugt ist.

Dabei kann der Druckspeicher prinzipiell außerhalb des Gehäuses der Aufnahme angeordnet sein. Demgegenüber ist jedoch eine Ausgestaltung der Aufnahme bevorzugt, bei der der Druckspeicher im Gehäuse der Aufnahme integriert ist. Dies bietet insbesondere die Vorteile, dass keine Druckdurchführung von außen vorzusehen ist, sehr kurze Hydraulikwege gegeben sind und auch nur sehr geringe Elastizitäten im hydraulischen System der Aufnahme bestehen.

Was ferner die konkrete Ausgestaltung eines solchen Druckspeichers für das hydraulische System der Aufnahme angeht, kann dieser beispielsweise als Gasdruckspeicher ausgebildet sein. Demgegenüber insbesondere im Hinblick auf eine effiziente Bauraumnutzung und einen geringen Wartungsaufwand bevorzugt ist allerdings eine Ausbildung der Aufnahme, bei der der Druckspeicher eine Kolben-Zylinder-Anordnung aufweist, mit einem Zylinderraum und einem in den Zylinderraum hinein zur Druckerzeugung über einen Federmechanismus federvorgespannten Kolben, der zur Druckentlastung gegen die Federvorspannung im Zylinderraum mechanisch verschiebbar ist. Ein solcher Federspeicher als Mittel zur Druckerzeugung über eine Kolben-Zylinder-Anordnung ist mit einer hohen Energiedichte und einer hohen Federsteifigkeit vorteilhaft einfach realisierbar.

So kann der Federmechanismus zur Federvorspannung des Kolbens des Druckspeichers bevorzugt in Reihe angeordnete Tellerfedern aufweisen. Vorteile solcher Tellerfedern im Vergleich zu z.B. Schraubendruckfedern - die grundsätzlich ebenfalls für diesen Zweck verwendbar wären - bestehen insbesondere darin, dass infolge hoher Federsteifigkeit große Federkräfte bei kleinem Federhub, also einem geringen axialen Bauraumbedarf realisierbar sind.

Prinzipiell kann der Federmechanismus mit einem festen Federhub bzw. Vorspannweg am bzw. im Druckspeicher montiert sein, um die Federvorspannung zu erzeugen. Insbesondere zur Kompensation von Toleranzen an/in den für den Federmechanismus verwendeten Bauteilen ist es jedoch bevorzugt, wenn die Federvorspannung des Kolbens des Druckspeichers am Federmechanismus einstellbar ist. Somit ist es vorteilhaft auch möglich, den jeweiligen Klemmerfordernissen entsprechend verschiedene, definierte Klemmkraftvorgaben zu machen bzw. die Federkraft je nach Bedarf nachzujustieren.

Zur Einstellung der Federvorspannung des Kolbens weist der Druckspeicher bevorzugt einen Stellmechanismus auf, über den am Federmechanismus ein Federweg stufenlos vorgebbar ist, wie z.B. einen Gewindetrieb. Eine (nur) gestufte Einstellmöglichkeit, etwa unter Verwendung von Passscheiben unter, über oder zwischen einzelnen Federn des Federmechanismus zur Einstellung des Federwegs und damit der Federvorspannung, ist indes ebenfalls denkbar, wenngleich weniger bevorzugt.

In einer bevorzugten Weiterbildung der Aufnahme kann der Druckspeicher schließlich auch einen einstellbaren Anschlag für den Kolben seiner Kolben-Zylinder-Anordnung besitzen, der eine mechanische Verschiebung des Kolbens gegen den Federmechanismus bezüglich des Gehäuses der Aufnahme begrenzt. Somit kann auf einfache Weise verhindert werden, dass die Federn auf Block einfedern, was vorteilhaft die Lebensdauer der Federn erhöht und vor Überlastung bzw. Federbruch schützt.

Wie weiter oben mit der Formulierung "wenigstens ein Kraftübertragungselement" schon impliziert, ist es grundsätzlich ausreichend, wenn der Klemmmechanismus nur ein Kraftübertragungselement zur Klemmung der Stifte umfasst, vorausgesetzt die Stifte können sich hinreichend aneinander bzw. gegenüber dem Gehäuse abstützen. Demgegenüber ist es jedoch bevorzugt, wenn der Klemmmechanismus eine Mehrzahl von Kraftübertragungselementen aufweist, die die Stifte in der Kammer in symmetrischer Anordnung umgeben und denen jeweils ein hydraulisch beaufschlagbarer Aktuator zugeordnet ist. Vorteile einer solchen Anordnung gegenüber einem Klemmmechanismus mit nur einem Kraftübertragungselement bestehen insbesondere darin, dass jedes einzelne Kraftübertragungselement nur einen im Verhältnis kleinen Weg zurücklegen muss, um die Stifte zu klemmen, und die Aufnahme schon infolge der Symmetrie der Anordnung insgesamt besser ausgewuchtet ist.

Wenn der Klemmmechanismus eine Mehrzahl von hydraulisch beaufschlagbaren Aktuatoren besitzt, können diese prinzipiell jeweils über eine eigens zugeordnete Druckerzeugung hydraulisch beaufschlagt werden. Demgegenüber ist es insbesondere mit Blick auf einen möglichst geringen baulichen Aufwand jedoch bevorzugt, wenn die verschiedenen Aktuatoren hydraulisch miteinander kommunizieren, so dass die Aktuatoren gemeinsam hydraulisch beaufschlagbar sind. Dann kann an allen Aktuatoren der gleiche Druck wirken, woraus sich vorteilhaft auch ein "selbstzentrierender" Effekt an dem / um das Stiftpaket ergibt, wobei die jeweils gleiche Auslenkung an den Aktuatoren die Gefahr von Unwuchten zusätzlich reduziert.

In einer weiteren, bevorzugten Ausgestaltung der Aufnahme hat die Abstützanordnung eine an dem Gehäuse der Aufnahme montierte, zusammen mit dem Gehäuse die Kammer begrenzende, gummielastische Membran, welche einen Aufnahmeabschnitt besitzt, auf dessen Außenseite das Werkstück mit einer seiner Werkstückflächen flächig auflegbar ist. Im Aufnahmeabschnitt der gummielastischen Membran ist dabei vorzugsweise eine Perforation als Bestandteil der Halteanordnung der Aufnahme ausgebildet, so dass ein an der Kammer angelegtes Vakuum über die Perforation auf der Außenseite des Aufnahmeabschnitts der gummielastischen Membran zum Halten eines zu bearbeitenden Werkstücks ansteht. Andere Wirkprinzipien für die Halteanordnung sind jedoch auch möglich, wie bereits ausführlich in der älteren deutschen Patentanmeldung DE 10 2021 005 202.1 (DE 10 2021 005 202 A1) beschrieben, auf die an dieser Stelle diesbezüglich nochmals ausdrücklich Bezug genommen sei.

Ein besonderer Vorteil der beanspruchten Halteanordnung mit dem Wirkprinzip "Vakuum" besteht darin, dass die Haltekräfte nicht nur im Hinblick auf ihr Vorhandensein oder Nicht-Vorhandensein (d.h. Haltekraft "ein" oder "aus") im Prozess einfach zu steuern sind, sondern ebenfalls in ihrer Höhe, so dass das Werkstück z.B. in Abhängigkeit von seiner Geometrie und/oder seinem Werkstoff und dessen Eigenschaften und/oder vom Bearbeitungsfortschritt und/oder von den jeweils wirkenden Bearbeitungskräften mehr oder weniger stark am Aufnahmeabschnitt der gummielastischen Membran gehalten werden kann. Letztlich ist eine gute und leichte Steuerbarkeit der Haltekräfte an der Aufnahme auch einer hohen Prozesssicherheit förderlich.

Anstelle einer solchen Membran kann freilich auch eine Ringdichtung am Gehäuse der Aufnahme vorgesehen sein, die im Betrieb an dem Werkstück anliegt und einen evakuierbaren Bereich der Kammer mit den Stiften von der umgebenden Atmosphäre trennt, um eine Art "Saugnapf" oder "Saugglocke" als Bestandteil der Halteanordnung für das Werkstück zu bilden. Die vorerwähnte Membran bietet einer solchen Ringdichtung gegenüber allerdings insbesondere den Vorteil, dass das Werkstück auf der Aufnahme an seiner aufgenommenen Werkstückfläche ohne großen Aufwand geschützt ist, nämlich durch den Aufnahmeabschnitt der Membran, während eine Ringdichtung besondere Schutzmaßnahmen an der aufgenommenen Werkstückfläche und/oder den Stiftenden erfordern würde, dort etwa in Form einer Gummierung od.dgl., um eine Beschädigung des damit abgestützt gehaltenen Werkstücks zuverlässig zu vermeiden. Die Verwendung eines gummiartigen Werkstoffs im Anlagebereich zum Werkstück dient in jedem Fall auch dazu, während einer Bearbeitung des Werkstücks infolge eines im Verhältnis hohen Reibbeiwerts auch mögliche Querkräfte oder Torsionsmomente aufnehmen zu können, ohne dass es zu einer Querverlagerung bzw. Verdrehung des Werkstücks auf der Aufnahme kommt.

Was des Weiteren die Abstützanordnung der Aufnahme mit ihren in der Kammer des Gehäuses geeignet "gepackten", mindestens zum Großteil längsverschiebbaren Stiften angeht, können diese in der Kammer - bei aufgehobener Klemmung durch den Klemmmechanismus und soweit längsverschiebbar - grundsätzlich frei längsbeweglich angeordnet sein. Ein Anpassen bzw. Abformen der Geometrie des zu haltenden Werkstücks kann dann unter äußeren Kräften erfolgen, indem etwa die Aufnahme auf ein zu haltendes Werkstück von oben "aufgelegt" wird. Dabei liegen - z.B. im Falle der oben beschriebenen, bevorzugten Ausgestaltung der Aufnahme mit einer die Kammer begrenzenden, gummielastischen Membran - die vom Klemmmechanismus freigegebenen, längsverschiebbaren Stifte unter Wirkung der Erdbeschleunigung mit ihrer Masse an der Innenseite des Aufnahmeabschnitts der gummielastischen Membran an und drücken den flexiblen Aufnahmeabschnitt infolge der somit wirkenden Schwerkraft mit seiner Außenseite gegen das aufzunehmende Werkstück. Liegt der Aufnahmeabschnitt der gummielastischen Membran mit seiner Außenseite dann vollflächig an der Gegenfläche des zu haltenden Werkstücks an, können die Stifte mittels des Klemmmechanismus aneinander geklemmt werden, so dass die abgeformte Flächengeometrie quasi "eingefroren" wird und die Aufnahme das Werkstück in der Folge flächig und fest abzustützen vermag. Anstelle der Schwerkraft können grundsätzlich auch andere, auf die Stifte wirkende äußere Kräfte für den Abformvorgang zum Einsatz kommen, beispielsweise eine durch das Werkstück hindurch auf die Stifte wirkende Magnetkraft.

Der vorbeschriebenen Schwerkraftlösung speziell im Hinblick auf eine Richtungsunabhängigkeit beim Abformvorgang gegenüber bevorzugt ist allerdings eine Ausgestaltung der Aufnahme, bei der die längsverschiebbaren Stifte der Abstützanordnung in einer Richtung weg vom Gehäuse der Aufnahme federvorgespannt sind.

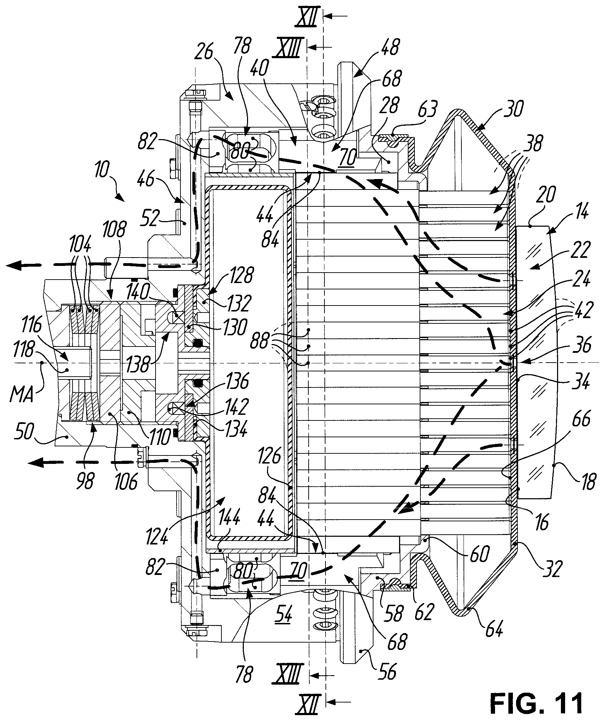

Zur Federvorspannung der längsverschiebbaren Stifte der Abstützanordnung ist es beispielsweise möglich, jedem der Stifte eine Schraubendruckfeder zuzuordnen, um die Federvorspannung in der Richtung weg vom Gehäuse zu erzeugen, wie dies etwa in der älteren deutschen Patentanmeldung DE 10 2021 005 202.1 gezeigt (DE 10 2021 005 202 A1; siehe dort insbesondere die Fig. 9 und 11) und beschrieben ist. Insbesondere im Hinblick auf einen möglichst geringen baulichen Aufwand ist es demgegenüber jedoch bevorzugt, wenn die längsverschiebbaren Stifte der Abstützanordnung mit Hilfe wenigstens eines Luftfederelements in einer Richtung weg vom Gehäuse der Aufnahme federvorgespannt sind. Weitere Vorteile eines Luftfederelements bestehen in der Variabilität der Anpresskraft, die durch Druckerhöhung oder -senkung im Luftfederelement leicht eingestellt werden kann, sowie der im Verhältnis geringen Abhängigkeit vom Federweg.

In einer bevorzugten, besonders wartungsfreundlichen Ausgestaltung der Aufnahme kann das Luftfederelement einen gummielastischen Balgabschnitt aufweisen, der an einem starren Befestigungsabschnitt vorzugsweise lösbar gehalten ist, welcher seinerseits über eine Magnetkupplung an einem gehäusefesten Teil der Aufnahme lösbar befestigt ist. Dies ermöglicht vorteilhaft einen einfachen und schnellen Austausch des Luftfederelements insgesamt bzw. des Balgabschnitts des Luftfederelements etwa im Falle einer Beschädigung. So kann ein neuer Balgabschnitt an einem starren Befestigungsabschnitt vormontiert und das Luftfederelement insgesamt bei einem nur kurzen Maschinenstillstand nach Herausnahme des Stiftpakets und des verschlissenen, d.h. auszutauschenden Luftfederelements aus der Kammer werkzeuglos in das Gehäuse der Aufnahme eingesetzt werden.

In einer vorteilhaften Ausgestaltung der Aufnahme kann ferner dem Luftfederelement ein Ringteil zugeordnet sein, das den gummielastischen, im Wesentlichen kreisscheibenförmigen, hohlen Balgabschnitt des Luftfederelements außenumfangsseitig schützend umgibt und eine Auslenkung des Balgabschnitts nach radial außen begrenzt. So kann zum einen auf einfache Weise verhindert werden, dass das aufgeblasene Luftfederelement mit radial benachbarten, ggf. scharfkantigen Bauteilen der Aufnahme in Kontakt tritt und dabei ggf. Schaden nimmt. Zum anderen ermöglicht das schützende Ringteil vorteilhaft eine kostengünstige Ausbildung des Balgabschnitts des Luftfederelements aus einem homogenen, relativ "dünnen" gummielastischen Material - im Gegensatz zu einer alternativ vorstellbaren, am Balgabschnitt umfänglich eigens armierten Ausgestaltung des Luftfederelements - wodurch die federnden Eigenschaften des Luftfederelements an jeder Stelle des Balgabschnitts im Wesentlichen gleich sind.

Grundsätzlich ist es möglich, die Stifte in der Kammer in einer gepackten Anordnung aufzunehmen, die einen annähernd kreisrunden oder einen vieleckigen Querschnitt aufweist. Bevorzugt ist allerdings eine Ausgestaltung der Aufnahme, bei der die Stifte der Abstützanordnung im Gehäuse der Aufnahme in einer im Wesentlichen hexagonalen Packung angeordnet sind, wozu sechs Kraftübertragungselemente eine im Wesentlichen hexagonale Öffnung begrenzen, durch die sich die Stifte hindurch erstrecken. Durch die im Querschnitt gesehen im Wesentlichen sechseckige Anordnung ergibt sich eine maximal dichte Packung der Stifte, was speziell für die Zuverlässigkeit der Klemmung der Stifte mittels des Klemmmechanismus von Vorteil ist. Außerdem wird durch diese Querschnittsform des Stiftpakets eine Kreisform gut angenähert, was für die flächig abgestützte Aufnahme von kreisrunden Werkstücken, wie etwa Brillenlinsenrohlingen vorteilhaft ist.

Was die Stifte selbst angeht, können diese prinzipiell einen beliebigen, z.B. mehreckigen Querschnitt aufweisen. Insbesondere im Hinblick auf eine einfache und kostengünstige Herstellung der Stifte - die in der Kammer der Aufnahme immerhin in großer Anzahl vorhanden sind (z.B. ca. 400 Stück in einem konkreten Ausführungsbeispiel) - ist es jedoch bevorzugt, wenn es sich bei den längsverschiebbaren Stiften der Abstützanordnung um Zylinderstifte handelt, mit jeweils einem abgesetzten, durchmessergrößten Klemmbereich zur Klemmung mittels des Klemmmechanismus, wobei die Stifte mit ihren Klemmbereichen linienförmig aneinander anliegen und/oder die Klemmbereiche der Stifte einen Außendurchmesser zwischen 1,0 mm und 10,0 mm, vorzugsweise zwischen 2,0 mm und 6,0 mm und besonders bevorzugt zwischen 2,5 mm und 5,0 mm aufweisen. Ein weiterer Vorteil der zylindrischen Ausgestaltung der Stifte besteht darin, dass die Stifte nicht gegen ein Verdrehen um ihre Längsachsen geführt werden müssen, vielmehr selbsttätig eine beliebige Rotationsstellung einnehmen können. Bei von den Erfindern durchgeführten Versuchen hat sich im Übrigen herausgestellt, dass ein Außendurchmesser der längsverschiebbaren Stifte im beanspruchten Bereich einen sehr guten Kompromiss zwischen einer möglichst hohen "Rasterauflösung" für die flächige Abstützung des Werkstücks einerseits und einer noch hinreichenden Leichtgängigkeit bei der Längsverschiebung der einzelnen Stifte nach Aufhebung der Klemmung andererseits darstellt.

In einer zweckmäßigen Ausgestaltung der Aufnahme kann des Weiteren vorgesehen sein, dass sich die längsverschiebbaren Stifte der Abstützanordnung mit ihren Stiftenden durch wenigstens eine gelochte Begrenzungsplatte hindurch erstrecken, die eine Längsbewegung der Stifte im Gehäuse der Aufnahme begrenzt, nämlich durch Bildung eines Anschlags für den verdickten (End)Bereich der Stifte. So ist zum einen auf einfache Weise für eine Verliersicherung der längsverschiebbaren Stifte etwa bei einer Reparatur der Aufnahme gesorgt, zum anderen stellt dies einen einfach realisierbaren Schutz für eine die Stifte abdeckende, gummielastische Membran dar - soweit vorhanden - die durch das in Richtung der Membran ggf. federvorgespannte Stiftpaket nicht übermäßig ausgelenkt werden kann, weil die Stifte sich infolge der Begrenzungsplatte nicht ungehindert in dieser Richtung bewegen können.

Des Weiteren ist eine Ausgestaltung der Aufnahme bevorzugt, bei der das Gehäuse der Aufnahme einen Befestigungsabschnitt zur auswechselbaren Befestigung an einer Werkstückspindel od.dgl. hat. Dies ist nicht nur im Hinblick auf die Servicefreundlichkeit und geringe Maschinenausfallzeiten im Wartungsfall von Vorteil, sondern ermöglicht auch den Einsatz der Aufnahme in verschiedener Weise: 1) Die Aufnahme kann fest in der jeweiligen Bearbeitungsmaschine verbaut sein, wobei das Werkstück auf der Aufnahme befestigt, anschließend bearbeitet und dann wieder von der Aufnahme gelöst wird. 2) Die Aufnahme kann in einer Maschine mit aufgebrachtem Werkstück von einer Arbeitsstation zu einer anderen Arbeitsstation gebracht werden. So könnten beispielsweise in der Brillenlinsenfertigung verschiedene Arbeitsschritte wie Generieren, Polieren und Markieren in einer kombinierten Maschine an verschiedenen Positionen durchgeführt werden. 3) Die Aufnahme mit aufgebrachtem Werkstück kann auch von einer Maschine zur nächsten Maschine transportiert werden und so quasi in der Art eines "wiederverwendbaren Blockstücks" jeweils über ein Nullpunktspannsystem neu gespannt werden.

In konstruktiv einfacher Ausgestaltung kann schließlich das Gehäuse der Aufnahme Schnittstellen zur Versorgung der Aufnahme mit Vakuum und Druckluft über eine Werkstückspindel aufweisen. Alternativ kann das Gehäuse der Aufnahme aber auch "eigenständige" Schnittstellen zur mechanischen bzw. fluidischen Betätigung besitzen, die unabhängig von der Werkstückspindel betätigt bzw. beaufschlagt werden, was allerdings mit einem größeren baulichen Aufwand verbunden wäre und deshalb weniger bevorzugt ist.

Weitere Merkmale, Eigenschaften und Vorteile der erfindungsgemäßen Aufnahme ergeben sich für den Fachmann aus der nachfolgenden Beschreibung eines bevorzugten Ausführungsbeispiels.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise schematischen Zeichnungen näher erläutert. In den Zeichnungen zeigen:

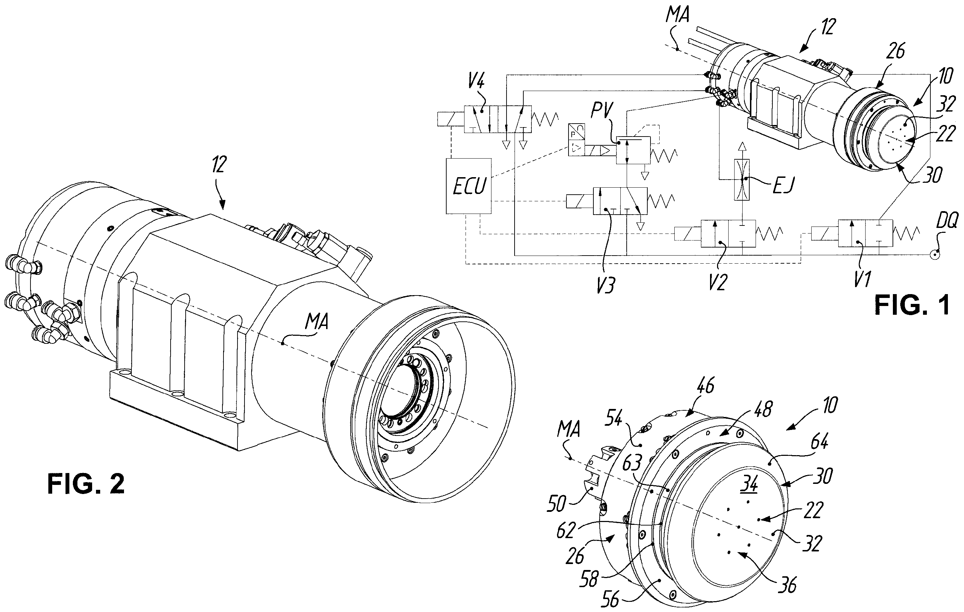

- Fig. 1: eine perspektivische Ansicht einer Werkstückspindel für z.B. eine kombinierte CNC-Fräs-Drehmaschine zur Flächenbearbeitung von insbesondere Brillenlinsen als optischen Werkstücken von schräg oben / vorne links, an der eine erfindungsgemäße Aufnahme für die Bearbeitung der optischen Werkstücke montiert ist, in Kombination mit einem an pneumatische Anschlüsse der Werkstückspindel "angeschlossenen" pneumatischen Schaltplan zur Illustration der Versorgung der Aufnahme über die Werkstückspindel mit Druckluft und Vakuum;
- Fig. 2: eine im Maßstab gegenüber der Fig. 1 vergrößerte, perspektivische Explosionsdarstellung der Werkstückspindel gemäß Fig. 1 mit der davon separierten, erfindungsgemäßen Aufnahme;

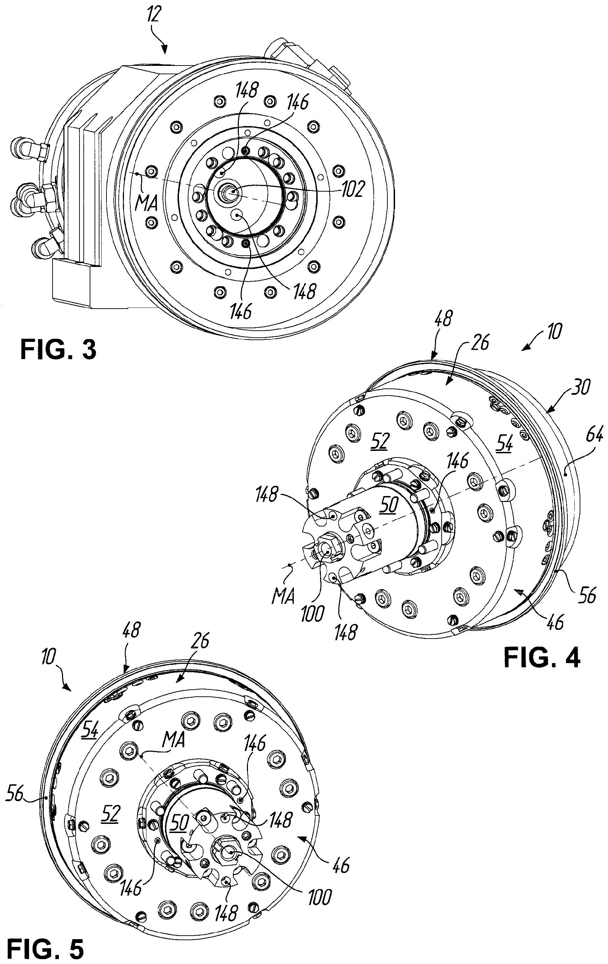

- Fig. 3: eine im Maßstab gegenüber der Fig. 2 nochmals vergrößerte, perspektivische Ansicht der Werkstückspindel von schräg oben / vorne links aus einem anderen Blickwinkel, mit Blick auf einen zentralen Stößel der Werkstückspindel zur mechanischen Betätigung eines Klemmmechanismus der Aufnahme sowie auf zwei Anschlussflächen zur Kopplung der Werkstückspindel mit einem Befestigungsabschnitt der Aufnahme, wobei die Anschlussflächen mit Schnittstellen zur Versorgung der Aufnahme mit Vakuum und Druckluft sowie mit Gewindebohrungen zur Festlegung des Befestigungsabschnitts der Aufnahme an der Werkzeugspindel versehen sind;
- Fig. 4: eine im Maßstab der Fig. 3 entsprechende, perspektivische Ansicht der Aufnahme gemäß den Fig. 1 und 2 von schräg hinten / oben rechts, mit Blick auf den komplementär zu den Anschlussflächen der Werkzeugspindel ausgebildeten Befestigungsabschnitt der Aufnahme sowie Schnittstellen zur Versorgung der Aufnahme mit Vakuum und Druckluft;
- Fig. 5: eine perspektivische Ansicht der Aufnahme gemäß den Fig. 1 und 2 von schräg hinten / oben links zur Veranschaulichung weiterer Details der im Bereich des Befestigungsabschnitts vorgesehenen Versorgungsschnittstellen der Aufnahme;
- Fig. 6: eine gegenüber der Darstellung in den Fig. 4 und 5 nochmals vergrößerte Rückansicht der Aufnahme gemäß den Fig. 1 und 2;
- Fig. 7: eine Schnittansicht der Aufnahme gemäß den Fig. 1 und 2 entsprechend der Schnittverlaufslinie VII-VII in Fig. 6, wobei der Schnittverlauf so gewählt ist, dass der Schnitt durch zwei Verschraubungen verläuft, mittels der über Festkörpergelenke elastisch auslenkbare Zylindergehäuse von Kolben-Zylinder-Anordnungen des Klemmmechanismus für längsverschiebbare Stifte einer Abstützanordnung der Aufnahme an einem Gehäuse der Aufnahme befestigt sind;

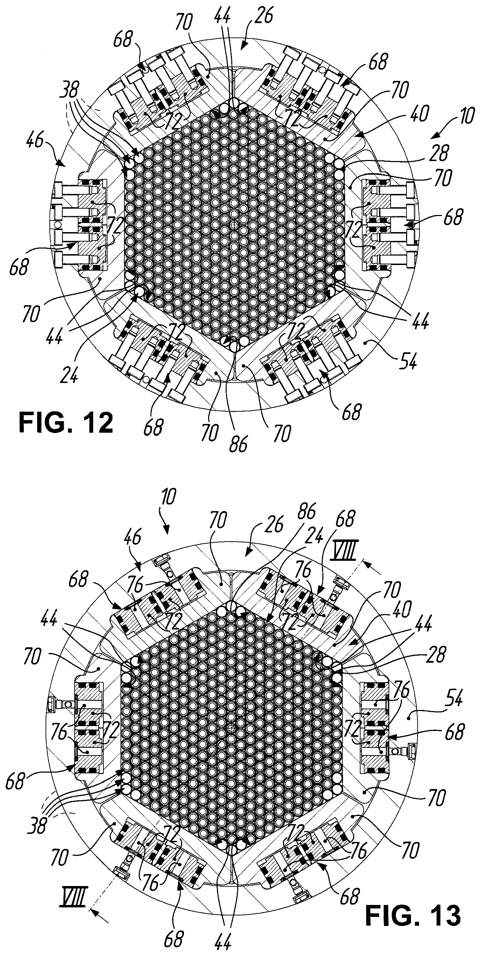

- Fig. 8: eine gegenüber dem Maßstab der Fig. 7 vergrößerte, entlang der Mittelachse sowie nach rechts abgebrochene Schnittansicht der Aufnahme gemäß den Fig. 1 und 2 entsprechend der Schnittverlaufslinie VIII-VIII in Fig. 6 bzw. 13, wobei der Schnittverlauf so gewählt ist, dass eine von einem - hier unbefüllt dargestellten - zentralen Druckspeicher der Aufnahme ausgehende, mit gestrichelter Linie markierte, hydraulische Verbindung zur Versorgung eines der Zylindergehäuse des Klemmmechanismus ersichtlich ist;
- Fig. 9: eine im Maßstab der Fig. 8 entsprechende, wiederum entlang der Mittelachse und nach rechts abgebrochene Schnittansicht der Aufnahme gemäß den Fig. 1 und 2 entsprechend der Schnittverlaufslinie IX-IX in Fig. 6, wobei der Schnittverlauf so gewählt ist, dass eine von dem Druckspeicher ausgehende, mit gestrichelter Linie markierte, hydraulische Verbindung zur Entlüftung des Hydrauliksystems des Klemmmechanismus ersichtlich ist;

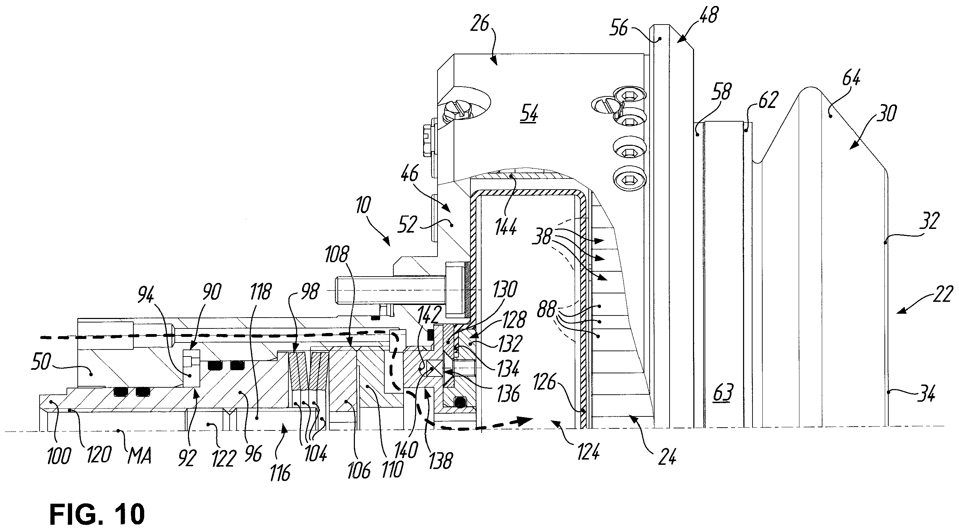

- Fig. 10: eine im Maßstab der Fig. 8 entsprechende, entlang der Mittelachse abgebrochene Teilschnittansicht der Aufnahme gemäß den Fig. 1 und 2 entsprechend der Schnittverlaufslinie X-X in Fig. 6, wobei der Schnittverlauf so gewählt ist, dass eine mit gestrichelter Linie markierte, pneumatische Verbindung zur Versorgung eines Luftfederelements ersichtlich ist, das dazu dient, die einzelnen längsverschiebbaren Stifte der Abstützanordnung in einer Richtung weg vom Gehäuse der Aufnahme federvorzuspannen;
- Fig. 11: eine gegenüber dem Maßstab der Fig. 8 verkleinerte, nach links abgebrochene Teilschnittansicht der Aufnahme gemäß den Fig. 1 und 2 entsprechend der Schnittverlaufslinie XI-XI in Fig. 6, wobei der Schnittverlauf so gewählt ist, dass eine mit gestrichelter Linie markierte, pneumatische Verbindung zum Evakuieren einer die Stifte der Abstützanordnung aufnehmenden Kammer ersichtlich ist, welche von einer gummielastischen Membran mit einer Perforation als Bestandteil einer Halteanordnung begrenzt ist, über die das Kammervakuum zum Halten eines Werkstücks wie angedeutet außen an der Membran ansteht;
- Fig. 12: eine Schnittansicht der Aufnahme gemäß den Fig. 1 und 2 im Maßstab der Fig. 6 und entsprechend der Schnittverlaufslinie XII-XII in Fig. 11, wobei der Schnittverlauf so gewählt ist, dass eine Befestigung der Kolben der Kolben-Zylinder-Anordnungen des Klemmmechanismus am Gehäuse der Aufnahme illustriert ist;
- Fig. 13: eine Schnittansicht der Aufnahme gemäß den Fig. 1 und 2 im Maßstab der Fig. 6 und entsprechend der Schnittverlaufslinie XIII-XIII in Fig. 11, wobei der Schnittverlauf so gewählt ist, dass der Schnitt mittig durch in den Kolben der Kolben-Zylinder-Anordnungen des Klemmmechanismus ausgebildete Durchgänge verläuft, über die die Kolben-Zylinder-Anordnungen hydraulisch beaufschlagbar sind;

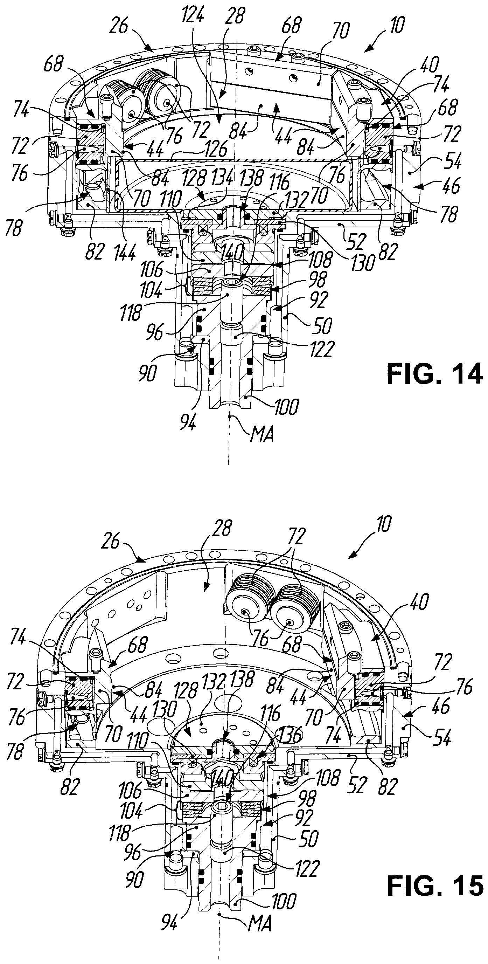

- Fig. 14: eine hinsichtlich des Schnittverlaufs entsprechend der Fig. 8 geschnittene, gegenüber der Darstellung in Fig. 8 in der Zeichnungsebene um 90 Grad entgegen dem Uhrzeigersinn verdrehte, perspektivische Ansicht der Aufnahme gemäß den Fig. 1 und 2 von schräg oben / vorne links, wobei insbesondere die gummielastische Membran, die Stifte der Abstützanordnung sowie eines der Zylindergehäuse (hinten links) weggelassen wurden, um den Blick auf zwei fest mit dem Gehäuse der Aufnahme verschraubte Kolben der Kolben-Zylinder-Anordnungen des Klemmmechanismus freizugeben;
- Fig. 15: eine entsprechend der Fig. 14 geschnittene und verdrehte, perspektivische Ansicht der Aufnahme gemäß den Fig. 1 und 2 von schräg oben / vorne links unter einem verglichen mit der Fig. 14 etwas steileren Blickwinkel, wobei gegenüber der Darstellung in Fig. 14 ein gummielastischer Balgabschnitt des Luftfederelements, die beiden Kolben hinten links sowie ein weiteres der Zylindergehäuse (hinten rechts) weggelassen wurden, um weitere Details des Hydrauliksystems des Klemmmechanismus der Aufnahme zu illustrieren;

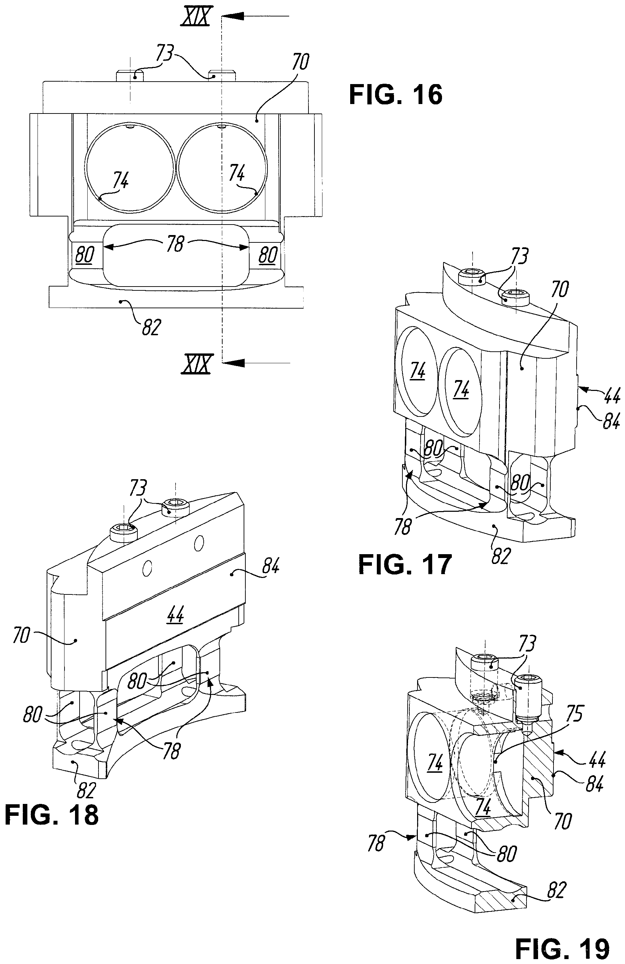

- Fig. 16: eine vergrößerte Rückansicht eines von der Aufnahme gemäß den Fig. 1 und 2 separierten Zylindergehäuses des Klemmmechanismus der Aufnahme, mit Blick in die zwei Zylinderräume des Zylindergehäuses;
- Fig. 17: eine perspektivische Ansicht des Zylindergehäuses gemäß Fig. 16 von schräg oben / hinten rechts, insbesondere zur besseren Veranschaulichung der am Zylindergehäuse unten angebrachten Festkörpergelenke;
- Fig. 18: eine perspektivische Ansicht des Zylindergehäuses gemäß Fig. 16 von schräg oben / vorne links, mit Blick auf ein einstückig mit dem Zylindergehäuse ausgebildetes Kraftübertragungselement; und
- Fig. 19: eine perspektivische Ansicht des Zylindergehäuses gemäß Fig. 16 entsprechend der Schnittverlaufslinie XIX-XIX in Fig. 16 von schräg oben / hinten rechts, wobei ein Teil der verdeckten Körperkanten des Zylindergehäuses mit gestrichelten Linien dargestellt ist, zur Illustration eines die Zylinderräume verbindenden Durchlasses zwischen den Zylinderräumen und von Maßnahmen zum Entlüften der Zylinderräume.

### DETAILLIERTE BESCHREIBUNG DES AUSFÜHRUNGSBEISPIELS

In den Fig. 1 bis 3 ist beispielhaft für ein technisches Umfeld, in dem eine nachfolgend anhand der Fig. 4 bis 19 noch mit einem Ausführungsbeispiel ausführlich beschriebene WerkstückAufnahme 10 zum Einsatz kommen kann, eine Werkstückspindel 12 dargestellt. Eine solche Werkstückspindel 12 kann ihrerseits beispielsweise in einer kombinierten CNC-Fräs-Drehmaschine zur Bearbeitung von insbesondere Brillenlinsen - in dieser Branche auch Generator genannt - verwendet werden. Solche Generatoren sind etwa von der Satisloh AG, Baar, Schweiz unter der Handelsbezeichnung "VFT-orbit" erhältlich und Gegenstand der Druckschrift EP 2 011 603 A1, auf die an dieser Stelle bezüglich Aufbau und Funktion solcher Generatoren zunächst ausdrücklich verwiesen sei.

Eine Brillenlinse 14 als Beispiel für ein zu bearbeitendes optisches Werkstück ist in Fig. 11 gezeigt. Die Brillenlinse 14 hat zwei - jedenfalls am Ende der Bearbeitung optisch wirksame - Werkstückflächen 16, 18 und einen Werkstückrand 20 dazwischen. Es handelt sich in den verschiedenen Bearbeitungszuständen, d.h. ausgehend vom Brillenlinsenrohling über das teilbearbeitete Brillenlinsenhalbzeug bis hin zur fertigbearbeiteten Brillenlinse, stets um ein flächiges Werkstück. Als solches muss die Brillenlinse 14 bei der Bearbeitung zuverlässig gehalten (Funktion "Halten") und zugleich gegen unerwünschte Verformungen abgestützt werden (Funktion "Abstützen"), wozu die hier beschriebene Aufnahme 10 dient. Hinsichtlich Aufbau und Funktion ist diese Aufnahme 10 eng verwandt mit der in der älteren deutschen Patentanmeldung DE 10 2021 005 202.1 (DE 10 2021 005 202 A1) derselben Anmelderin beschriebenen Aufnahme, wie eingangs schon erwähnt, so dass in der vorliegenden Beschreibung vornehmlich auf die Unterschiede hierzu eingegangen werden soll und ansonsten an dieser Stelle nochmals ausdrücklich auf diese ältere deutsche Patentanmeldung Bezug genommen wird.

Allgemein umfasst die Aufnahme 10 für die vorerwähnten Funktionen "Halten" und "Abstützen" einer zu bearbeitenden Brillenlinse 14 eine Halteanordnung 22 sowie eine Abstützanordnung 24 in bzw. an einem mehrteiligen Gehäuse 26 (siehe insbesondere die Fig. 7, 10 und 11). Im dargestellten Ausführungsbeispiel hat die Abstützanordnung 24 zunächst eine an dem Gehäuse 26 der Aufnahme 10 montierte, zusammen mit dem Gehäuse 26 eine Kammer 28 begrenzende, gummielastische Membran 30. Die Membran 30 besitzt einen Aufnahmeabschnitt 32, auf dessen Außenseite 34 gemäß Fig. 11 die Brillenlinse 14 mit einer (16) ihrer Werkstückflächen 16, 18 flächig aufgelegt werden kann. Im Aufnahmeabschnitt 32 der Membran 30 ist dabei eine Perforation 36 als Bestandteil der Halteanordnung 22 ausgebildet, so dass ein an der Kammer 28 angelegtes Vakuum - in Fig. 11 mit gestrichelten Pfeilen angedeutet - über die Perforation 36 auf der Außenseite 34 des Aufnahmeabschnitts 32 der Membran 30 zum Halten der zu bearbeitenden Brillenlinse 14 ansteht.

Diese Membran 30 ist in verschiedenen Ausgestaltungen Gegenstand der zeitgleich unter dem Titel "Elastische Membran für eine Aufnahme zur Bearbeitung von optischen Werkstücken, insbesondere Brillenlinsen, und damit ausgestattete Aufnahme" eingereichten deutschen Patentanmeldung DE 10 2023 110 129.3 derselben Anmelderin, wie eingangs schon erwähnt, auf die an dieser Stelle hinsichtlich Aufbau und Funktion der Membran 30 nochmals ausdrücklich Bezug genommen wird. Im Folgenden soll diese Membran 30 daher auch nur insoweit beschrieben werden, als es für das Verständnis der vorliegenden Erfindung erforderlich erscheint.

Die Abstützanordnung 24 weist ferner eine Vielzahl von in der Kammer 28 aufgenommenen, mindestens zum Großteil separat längsverschiebbaren Stiften 38 auf, welche wahlweise gegen eine Längsverschiebung, d.h. eine Verschiebung parallel zu einer Mittelachse MA der Aufnahme 10, bezüglich des Gehäuses 26 durch einen Klemmmechanismus 40 festgelegt werden können. Mit ihren Stiftenden 42 dienen die Stifte 38 dabei dazu (siehe Fig. 11), die mit einer ihrer Werkstückflächen 16, 18 über die Halteanordnung 22 an der Aufnahme 10 gehaltene Brillenlinse 14 an der den Stiftenden 42 zugewandten Werkstückfläche (hier 16) nach Maßgabe deren Geometrie flächig und fest abzustützen.

Wie nachfolgend noch ausführlich beschrieben wird, hat der Klemmmechanismus 40 wenigstens ein Kraftübertragungselement 44 - im dargestellten Ausführungsbeispiel sogar mehrere, nämlich sechs Kraftübertragungselemente 44 (vgl. die Fig. 12 und 13) - das/die nach einem für einen automatisierten Betrieb der Aufnahme 10 wesentlichen Aspekt durch fluidisch aufbringbare Kräfte bezüglich der Stifte 38 bewegt werden kann/können, um die Stifte 38 wahlweise in einem unbetätigten Zustand der Aufnahme 10 zu klemmen oder in einem betätigten Zustand der Aufnahme 10 freizugeben.

Der Aufbau des Gehäuses 26 der Aufnahme 10 ist am besten in Fig. 7 zu erkennen. Die zwei Hauptbestandteile des Gehäuses 26 sind eine Basis 46 und ein daran montierter Deckel 48, die z.B. miteinander verschraubt sind, wie in Fig. 2 angedeutet. Die Basis 46 umfasst - von links nach rechts in Fig. 7 gesehen - einen im Wesentlichen hohlzylindrischen Befestigungsabschnitt 50 kleineren Durchmessers zur auswechselbaren Befestigung an der Werkstückspindel 12, einen im Wesentlichen ringförmigen Bodenabschnitt 52 sowie einen wiederum im Wesentlichen hohlzylindrischen Kammerabschnitt 54 größeren Durchmessers, wobei der Bodenabschnitt 52 den Befestigungsabschnitt 50 mit dem Kammerabschnitt 54 der Basis 46 einstückig verbindet. An einer in Fig. 7 rechten Stirnseite des Kammerabschnitts 54 der Basis 46 ist der Deckel 48 mit einem im Wesentlichen ringförmigen Flanschabschnitt 56 angeflanscht. An dem Flanschabschnitt 56 schließt sich ein im Wesentlichen hohlzylindrischer Halteabschnitt 58 für die Membran 30 an. Der Halteabschnitt 58 des Deckels 48 endet an einem im Wesentlichen plattenförmigen, gelochten Begrenzungsabschnitt 60 für die einzelnen Stifte 38, wobei der Halteabschnitt 58 den Flanschabschnitt 56 mit dem Begrenzungsabschnitt 60 des Deckels 48 einstückig verbindet.

Am Halteabschnitt 58 des Deckels 48 ist die Membran 30 über einen ringförmigen Befestigungsabschnitt 62 vermittels einer Spannschelle 63 angebracht. Der Befestigungsabschnitt 62 der Membran 30 ist seinerseits durch einen Faltenbalgabschnitt 64 der Membran 30 mit deren Aufnahmeabschnitt 32 verbunden, wie in der vorerwähnten parallelen Patentanmeldung für die Membran 30 im Einzelnen beschrieben. Insbesondere aus den Fig. 7 und 11 ist ferner ersichtlich, dass die Basis 46, der Deckel 48 und die Membran 30 gemeinsam die Kammer 28 mit den darin aufgenommenen Stiften 38 begrenzen, deren Stiftenden 42 an einer Innenseite 66 der Membran 30 abstützend zur Anlage gebracht werden können.

In dem insoweit beschriebenen Gehäuse 26 der Aufnahme 10 ist der vorerwähnte Klemmmechanismus 40 für die Stifte 38 angeordnet, und zwar derart, dass er die Stifte 38 bezüglich der Mittelachse MA konzentrisch umgibt, so dass vermittels des Klemmmechanismus 40 eine senkrecht zur Mittelachse MA wirkende Querkraft an den Stiften 38 aufgebracht werden kann, um die Stifte 38 zu klemmen. Hierbei ist dem - im dargestellten Ausführungsbeispiel jedem - Kraftübertragungselement 44 des Klemmmechanismus 40 ein hydraulisch beaufschlagbarer Aktuator 68 zugeordnet (siehe insbesondere die Fig. 8 und 12 bis 15), um wahlweise eine Querbewegung des jeweiligen Kraftübertragungselements 44 bezüglich der Stifte 38 zu generieren. Dabei kann das bzw. jedes Kraftübertragungselement 44 des Klemmmechanismus 40 durch hydraulische Beaufschlagung des jeweiligen Aktuators 68 bezüglich des Gehäuses 26 der Aufnahme 10 gegen eine elastische Rückstellkraft ausgelenkt werden, um die Stifte 38 zu klemmen, was nachfolgend näher beschrieben werden soll.

In diesem Zusammenhang zeigen zunächst die Fig. 12 bis 15, dass der Klemmmechanismus 40 eine Mehrzahl von Kraftübertragungselementen 44 - nämlich sechs im dargestellten Ausführungsbeispiel - aufweist, welche die Stifte 38 in der Kammer 28 in symmetrischer Anordnung umgeben. Jedem dieser Kraftübertragungselemente 44 ist jeweils ein hydraulisch beaufschlagbarer Aktuator 68 zugeordnet, d.h. es gibt insgesamt sechs hiervon. Vorzugsweise kommunizieren die verschiedenen Aktuatoren 68 sämtlich hydraulisch miteinander, und zwar über eine entsprechende Hydraulickanalführung im Gehäuse 26 (vgl. die Fig. 8, 14 und 15), so dass die Aktuatoren 68 gemeinsam hydraulisch beaufschlagt werden können.

Gemäß insbesondere den Fig. 8 und 12 bis 15 handelt es sich bei den hydraulisch beaufschlagbaren Aktuatoren im dargestellten Ausführungsbeispiel jeweils um eine Kolben-Zylinder-Anordnung 68 mit einem Zylindergehäuse 70, das in den Fig. 16 bis 19 einzeln gezeigt ist, und wenigstens einem - hier sogar zwei - Kolben 72, die betätigungswirksam im Zylindergehäuse 70 angeordnet sind. Dafür weist das Zylindergehäuse 70 der Kolben-Zylinder-Anordnung 68 zwei über oben am Zylindergehäuse 70 angebrachte Entlüftungsschrauben 73 entlüftbare Zylinderräume 74 auf (siehe hierzu insbesondere die Fig. 16, 17 und 19), in denen jeweils ein Kolben 72 am Umfang geeignet abgedichtet aufgenommen ist, wie insbesondere die Fig. 12 und 13 zeigen. Die zwei Zylinderräume 74 eines jeden Zylindergehäuses 70 sind dabei über einen Durchgang 75 hydraulisch miteinander verbunden, wie in Fig. 19 gut zu sehen ist.

Der Fig. 12 ist ferner zu entnehmen, dass jeder Kolben 72 der Kolben-Zylinder-Anordnung 68 am Gehäuse 26 der Aufnahme 10 befestigt - nämlich mit dem Kammerabschnitt 54 des Gehäuses 26 verschraubt - ist, so dass das Zylindergehäuse 70 der jeweiligen Kolben-Zylinder-Anordnung 68 (im Gegensatz zu den Kolben 72) relativ zum Gehäuse 26 der Aufnahme 10 beweglich ist. In diesem Zusammenhang illustrieren die Fig. 8 und 13 bis 15 noch, dass jeder Kolben 72 der Kolben-Zylinder-Anordnungen 68 mit einem Durchgang 76 zur hydraulischen Beaufschlagung der jeweiligen Kolben-Zylinder-Anordnung 68 versehen ist.

Eine weitere Besonderheit des Klemmmechanismus 40 besteht darin, dass das Zylindergehäuse 70 jeder Kolben-Zylinder-Anordnung 68 elastisch auslenkbar am Gehäuse 26 der Aufnahme 10 angebracht ist, und zwar über wenigstens ein - im dargestellten Ausführungsbeispiel sogar zwei - Festkörpergelenk 78 (siehe hierzu insbesondere die Fig. 16 bis 19), welches in der Art einer Parallelogrammführung einen Doppel-Arm 80 besitzt. Genauer gesagt weisen jeweils zwei Festkörpergelenke 78 eine gemeinsame Grundplatte 82 auf, die mit dem Bodenabschnitt 52 des Gehäuses 26 verschraubt ist, wie z.B. die Fig. 7 zeigt, und von der sich besagte Doppel-Arme 80 wegerstrecken, um das jeweilige Zylindergehäuse 70 elastisch auslenkbar zu tragen.

Zum Klemmmechanismus 40 ist des Weiteren noch zu sagen, dass gemäß insbesondere den Fig. 17 bis 19 jedes Kraftübertragungselement 44 integraler Bestandteil eines Zylindergehäuses 70 ist. Dabei weist das Kraftübertragungselement 44 eine ebene Anlagefläche 84 für die Stifte 38 auf und steht im am Gehäuse 26 montierten Zustand des jeweiligen Zylindergehäuses 70 in die Kammer 28 hinein vor (vgl. die Fig. 7, 8, 11, 14 und 15).

Was die Anordnung der Stifte 38 der Abstützanordnung 24 in der Kammer 28 des Gehäuses 26 angeht, ist in den Fig. 12 und 13 gut zu erkennen, dass die Stifte 38 im Gehäuse 26 der Aufnahme 10 in einer im Wesentlichen hexagonalen Packung angeordnet sind, wozu die sechs Kraftübertragungselemente 44 bzw. deren Anlageflächen 84 eine im Wesentlichen hexagonale Öffnung 86 begrenzen, durch die sich die Stifte 38 hindurch erstrecken.

Wie ferner den Schnitten gemäß den Fig. 12 und 13 zu entnehmen ist, handelt es sich bei den längsverschiebbaren Stiften 38 der Abstützanordnung 24 im dargestellten Ausführungsbeispiel um Zylinderstifte, mit jeweils einem abgesetzten, durchmessergrößten Klemmbereich 88 (siehe insbesondere die Fig. 7, 8 und 11) zur Klemmung mittels des Klemmmechanismus 40. Die Stifte 38 liegen in ihrer gepackten Anordnung mit ihren Klemmbereichen 88 linienförmig aneinander an. In ihren Klemmbereichen 88 können die Stifte 38 dabei z.B. einen Außendurchmesser zwischen 1,0 mm und 10,0 mm, vorzugsweise zwischen 2,0 mm und 6,0 mm und besonders bevorzugt zwischen 2,5 mm und 5,0 mm aufweisen. Bei der Dimensionierung der Stifte 38 ist zum einen zu berücksichtigen, dass die Stifte 38 nicht zu dick sein dürfen, damit bei der Abformung der zumeist gekrümmten Werkstückflächen 16 bzw. 18 der an der Aufnahme 10 aufzunehmenden Brillenlinsen 14 eine möglichst hohe Auflösung erzielt wird. Zum anderen ist der Durchmesser der Stifte 38 nach unten begrenzt vornehmlich durch Fertigungsanforderungen bzw. -möglichkeiten.

Was die Anzahl der Stifte 38 angeht, werden z.B. für eine hexagonale Stiftpackung mit einer "Schlüsselweite" von 65 mm - entsprechend der maximal vollständig unterstützten Kreisform einer aufzunehmenden Brillenlinse 14 - und einem Eckmaß von 75 mm 469 Stifte mit einem Durchmesser von 3 mm benötigt. In einer anderen Variante mit einer hexagonalen Stiftpackung, die eine Schlüsselweite von 86 mm und ein Eckmaß von ca. 92 mm besitzt, wären dies 397 Stifte mit einem Durchmesser von 4 mm. Die verdickten Klemmbereiche 88 der Stifte 38 können z.B. eine Länge von ca. 30 mm aufweisen, so dass über diese Länge auch eine gegenseitige Führung der Stifte 38 gegeben ist, die einem "Verkanten" der Stifte 38 entgegenwirkt.

Schließlich erstrecken sich die längsverschiebbaren Stifte 38 der Abstützanordnung 24 mit ihren durchmesserdünneren Stiftenden 42 durch eine gelochte Begrenzungsplatte hindurch, die im dargestellten Ausführungsbeispiel durch den im Wesentlichen plattenförmigen Begrenzungsabschnitt 60 des Deckels 48 des Gehäuses 26 gebildet ist und welche eine Längsbewegung der Stifte 38 im Gehäuse 26 der Aufnahme 10 begrenzt.

Eine weitere Besonderheit des in den Fig. 4 bis 19 gezeigten Ausführungsbeispiels für die Aufnahme 10 besteht darin, wie der hydraulische Druck erzeugt wird, der zur Betätigung des Klemmmechanismus 40 der Aufnahme 10 dient. Allgemein ist hierzu vorgesehen, dass der bzw. jeder einem Kraftübertragungselement 44 zugeordnete, hydraulisch beaufschlagbare Aktuator - d.h. die Kolben-Zylinder-Anordnung(en) 68 im vorliegenden Ausführungsbeispiel - im unbetätigten Zustand der Aufnahme 10 über einen Druckspeicher 90 druckbeaufschlagt ist, der im betätigten Zustand der Aufnahme 10 druckentlastet ist.

Insbesondere den Fig. 7 bis 10, 14 und 15 ist in diesem Zusammenhang zu entnehmen, dass der Druckspeicher 90 im Gehäuse 26 der Aufnahme 10 integriert, genauer gesagt platzsparend im Befestigungsabschnitt 50 des Gehäuses 26 aufgenommen ist. Dabei weist der Druckspeicher 90 ebenfalls eine Kolben-Zylinder-Anordnung 92 auf, mit einem Zylinderraum 94 und einem darin längsverschieblich aufgenommenen Kolben 96. Zur Druckerzeugung im Druckspeicher 90 ist der im dargestellten Ausführungsbeispiel gestufte Kolben 96 in den ebenfalls gestuften Zylinderraum 94 hinein vorgespannt, nämlich über einen Federmechanismus 98 federvorgespannt.

Zur Druckentlastung hingegen ist der Kolben 96 gegen die Federvorspannung des Federmechanismus 98 im Zylinderraum 94 mechanisch verschiebbar. Hierfür ist am Kolben 96 ein Betätigungsfortsatz 100 vorgesehen, über den der Kolben 96 beispielsweise unter Zuhilfenahme einer werkstückspindelseitigen Schubstange 102 (siehe Fig. 3), die an dem über den Befestigungsabschnitt 50 des Gehäuses 26 hinaus vorstehenden Betätigungsfortsatz 100 angeschlossen ist, gegen die Kraft des Federmechanismus 98 verschoben werden kann. Dabei vergrößert sich das Volumen des Zylinderraums 94, worauf die Zylindergehäuse 70 der Kolben-Zylinder-Anordnungen 68 des Klemmmechanismus 40 infolge ihrer federnden Aufhängung über die Festkörpergelenke 78 von den Stiften 38 der Abstützanordnung 24 zurückfedern, so dass die Kraftübertragungselemente 44 die Stifte 38 für eine Längsverschiebung freigeben.

Wie insbesondere die Fig. 7 bis 10, 14 und 15 zeigen, weist der Federmechanismus 98 zur Federvorspannung des Kolbens 96 des Druckspeichers 90 in Reihe angeordnete Tellerfedern 104 auf. Die Tellerfedern 104 liegen auf der vom Zylinderraum 94 abgewandten Seite am Kolben 96 an und sind gegenüber dem Gehäuse 26 durch ein im Befestigungsabschnitt 50 des Gehäuses 26 montiertes, scheibenförmiges Gegenlager 106 abgestützt.

Dabei ist die Anordnung so getroffen, dass die Federvorspannung des Kolbens 96 des Druckspeichers 90 am Federmechanismus 98 eingestellt werden kann. Zur Einstellung der Federvorspannung des Kolbens 96 des Druckspeichers 90 ist ein Stellmechanismus 108 vorgesehen, über den am Federmechanismus 98 ein Federweg stufenlos vorgegeben werden kann. Gemäß insbesondere Fig. 9 ist der Stellmechanismus 108 durch das Gegenlager 106 und eine zugeordnete Konterscheibe 110 zur Sicherung des Gegenlagers 106 gebildet, die am Außenumfang mit Außengewinden 112 versehen sind, welche mit einem Innengewinde 114 am Innenumfang des Befestigungsabschnitts 50 des Gehäuses 26 zusammenwirken. Für den Fachmann ist ersichtlich, dass durch Verdrehen von Gegenlager 106 und Konterscheibe 110 im Befestigungsabschnitt 50 des Gehäuses 26 an den Tellerfedern 104 ein Hub vorgegeben wird, über den die auf den Kolben 96 wirkende Federkraft des Federmechanismus 98 eingestellt werden kann.

Außerdem hat der Druckspeicher 90 einen einstellbaren Anschlag 116 für den Kolben 96 seiner Kolben-Zylinder-Anordnung 92, der eine mechanische Verschiebung des Kolbens 96 gegen den Federmechanismus 98 bezüglich des Gehäuses 26 der Aufnahme 10 begrenzt. Der Anschlag 116 umfasst gemäß insbesondere Fig. 7 eine erste Madenschraube 118, die in einer entlang der Mittelachse MA durch den Kolben 96 verlaufenden Gewindebohrung 120 (siehe die Fig. 7 bis 10) eingeschraubt ist und in Richtung des Gegenlagers 106 für die Tellerfedern 104 über das in diesen Figuren rechte Ende des Kolbens 96 übersteht. Durch Einstellung eines geeigneten Überstands der ersten Madenschraube 118 kann der Hub des Kolbens 96 in Richtung der Tellerfedern 104 so begrenzt werden, dass das vorstehende Ende der ersten Madenschraube 118 mit dem Gegenlager 106 in Kontakt tritt bevor die Tellerfedern 104 "auf Block" liegen, was es zur Schonung der Tellerfedern 104 zu vermeiden gilt. Zur Sicherung der ersten Madenschraube 118 in einer einmal eingestellten Position am Kolben 96 ist diese auf der vom Gegenlager 106 abgewandten Seite mittels einer zweiten Madenschraube 122 gekontert, die ebenfalls in die Gewindebohrung 120 eingeschraubt ist.

Zu dem im Gehäuse 26 der Aufnahme 10 integrierten Druckspeicher 90 ist noch anzumerken, dass die Fig. 7 bis 11, 14 und 15 den Druckspeicher 90 zur Vereinfachung der Darstellung im unbefüllten Zustand, d.h. ohne Hydraulikflüssigkeit zeigen. Dabei liegt der über den Federmechanismus 98 federvorgespannte Kolben 96 der Kolben-Zylinder-Anordnung 92 des hier "trockenen" Druckspeichers 90 auf Anschlag am Gehäuse 26 der Aufnahme 10 an. Im befüllten Zustand des Druckspeichers 90 indes - in den Figuren nicht dargestellt - liegt dessen Kolben 96 nicht am Gehäuse 26 an, so dass ein Kraftschluss zwischen dem Kolben 96 des Druckspeichers 90 und den Zylindergehäusen 70 der den Kraftübertragungselementen 44 zugeordneten Kolben-Zylinder-Anordnungen 68 des Klemmmechanismus 40 über die Hydraulikflüssigkeit besteht. Die hydraulische Verbindung zwischen der Kolben-Zylinder-Anordnung 92 des Druckspeichers 90 und den Kolben-Zylinder-Anordnungen 68 des Klemmmechanismus 40, die über entsprechende Kanäle und Verbindungsbohrungen im Gehäuse 26 der Aufnahme 10 hergestellt ist, ist schließlich am besten in den Fig. 8, 14 und 15 zu erkennen und zudem in Fig. 8 mit einem gestrichelten Pfeil gekennzeichnet.

Bei dem hier dargestellten Ausführungsbeispiel der Aufnahme 10 sind - analog zum zweiten Ausführungsbeispiel der Aufnahme gemäß der älteren deutschen Patentanmeldung DE 10 2021 005 202.1 (DE 10 2021 005 202 A1), auf dessen Beschreibung an dieser Stelle verwiesen sei - die längsverschiebbaren Stifte 38 der Abstützanordnung 24 in Richtung der Innenseite 66 am Aufnahmeabschnitt 32 der Membran 30, d.h. in einer Richtung weg vom Gehäuse 26 der Aufnahme 10 federvorgespannt, wofür ein Luftfederelement 124 vorgesehen ist, wie die Fig. 7, 8, 10, 11 und 14 zeigen.

Das Luftfederelement 124 hat einen gummielastischen Balgabschnitt 126, der an einem starren Befestigungsabschnitt 128 lösbar gehalten ist. Hierfür umfasst der Befestigungsabschnitt 128 zwei Ringteile 130, 132, die gemäß Fig. 10 miteinander verschraubt sind und dabei einen ringförmigen Klemmabschnitt 134 des Balgabschnitts 126 klemmen. Der Befestigungsabschnitt 128 ist ferner über eine Magnetkupplung 136 an einem gehäusefesten Teil der Aufnahme 10, hier in Form eines in das Innengewinde 114 am Befestigungsabschnitt 50 des Gehäuses 26 eingeschraubten Flanschrings 138, lösbar befestigt. Die Magnetkupplung 136 weist hierbei einen im dargestellten Ausführungsbeispiel ringförmigen Permanentmagneten 140 auf, der in einer im Flanschring 138 ausgebildeten Ringnut 142 (siehe die Fig. 8, 10 und 11) angebracht ist und mit dem Ringteil 130 des Befestigungsabschnitts 128, welches ferromagnetisch ausgebildet sein kann, und/oder der metallischen Verschraubung zusammenwirkt, um das Luftfederelement 124 an Ort und Stelle zu halten. Hierdurch kann das Luftfederelement 124 im Wartungsfall der Aufnahme 10 auf einfache Art und Weise ausgetauscht werden.

Zum Luftfederelement 124 ist schließlich noch zu sagen, dass im dargestellten Ausführungsbeispiel dem Luftfederelement 124 ein geschlitztes Ringteil 144 zugeordnet ist (siehe die Fig. 7, 8, 10, 11 und 14), das den gummielastischen, im Wesentlichen kreisscheibenförmigen, hohlen Balgabschnitt 126 des Luftfederelements 124 außenumfangsseitig schützend umgibt und eine Auslenkung des Balgabschnitts 126 nach radial außen begrenzt.

Zum Zusammenspiel von Aufnahme 10 und Werkstückspindel 12 bleibt anzumerken, dass das Gehäuse 26 der Aufnahme 10 - neben der vorbeschriebenen mechanischen Verbindung zur Ansteuerung des Druckspeichers 90 für den Klemmmechanismus 40 der Aufnahme 10 (Betätigungsfortsatz 100 an der Aufnahme 10, Schubstange 102 an der Werkstückspindel 12) - Schnittstellen 146, 148 zur Versorgung der Aufnahme 10 mit Vakuum und Druckluft über die Werkstückspindel 12 aufweist. Diese sind in den Fig. 3 bis 5 gezeigt, wobei mit dem Bezugszeichen 146 die Schnittstellen für das Vakuum der Halteanordnung 22 und mit dem Bezugszeichen 148 die Schnittstelle für die Druckluft für das Luftfederelement 124 gekennzeichnet sind. Die in der Aufnahme 10 vorgesehenen Wege für das Vakuum der Halteanordnung 22 sind in Fig. 11 mit gestrichelten Pfeilen angedeutet, während die in der Aufnahme 10 vorgesehenen Wege für die Druckluft für das Luftfederelement 124 in der Fig. 10 mit einem gestrichelten Pfeil gekennzeichnet sind. Entsprechende gestrichelte Pfeile zeigen in den Fig. 8 und 9 die hydraulischen Wege, wobei in Fig. 8 die Betätigung des Klemmmechanismus 40 dargestellt ist, während die Fig. 9 eine Entlüftung des Hydrauliksystems zeigt.

Die pneumatische Versorgung der Werkstückspindel 12 erfolgt entsprechend dem in Fig. 1 dargestellten Schaltplan über vier Schaltventile V1, V2, V3, V4, die an eine gemeinsame Druckluftquelle DQ angeschlossen sind. Alle Schaltventile V1, V2, V3, V4 sind mittels einer Feder in eine Betriebsstellung vorgespannt und können über je ein Solenoid geschaltet werden. Die Solenoide der Schaltventile sind über gestrichelt dargestellte Steuerleitungen mit einer gemeinsamen Steuerung ECU zur automatisierten Betätigung von Aufnahme 10 und Werkstückspindel 12 verbunden.

Das erste Schaltventil V1 ist ein in eine Sperrstellung vorgespanntes 2/2-Wegeventil, das eine Verbindung zu einem ersten Druckanschluss an der Werkstückspindel 12 für eine Luftlagerung der Werkstückspindel 12 freigibt.

Das zweite Schaltventil V2 ist ebenfalls ein in eine Sperrstellung vorgespanntes 2/2-Wegeventil. Dieses schaltet eine Verbindung zu einem Ejektor EJ zur Vakuumerzeugung, dessen Vakuumanschluss mit einem Unterdruckanschluss der Werkstückspindel 12 verbunden ist.

Bei dem dritten Schaltventil V3 handelt es sich um ein in eine Ablassstellung vorgespanntes 3/2-Wegeventil. Über dieses Ventil kann ein weiteres Proportionalventil PV, das über einen zweiten Druckanschluss mit der Werkstückspindel 12 verbunden ist, zur Druckeinstellung an dem Luftfederelement 124 be- oder entlastet werden. Das Proportionalventil PV ist ebenfalls über eine gestrichelt dargestellte Steuerleitung mit der Steuerung ECU verbunden.

Bei dem vierten Schaltventil V4 handelt es sich um ein 5/2-Wegeventil zur pneumatischen Ansteuerung eines doppelwirkenden Zylinders in bzw. an der Werkstückspindel 12, mittels dessen die Schubstange 102 für den Klemmmechanismus 40 betätigbar ist.

Die beiden Abgänge des vierten Schaltventils V4 sind über einen dritten Druckanschluss und einen vierten Druckanschluss an der Werkstückspindel 12 mit je einem Druckraum des doppeltwirkenden Zylinders verbunden, so dass je nach Ventilstellung immer ein Druckraum über das vierte Schaltventil V4 druckbeaufschlagt und der andere Druckraum über das vierte Schaltventil V4 drucklos mit der Umgebung verbunden ist. Das federvorgespannte vierte Schaltventil V4 ist hier derart verschaltet, dass im unbetätigten Zustand des vierten Schaltventils V4 der Druckraum des doppeltwirkenden Zylinders mit Druck beaufschlagt wird, der auf die Schubstange 102 eine Kraft in eine Richtung weg von der Aufnahme 10 bewirkt.

Eine Aufnahme für die Bearbeitung von insbesondere Brillenlinsen als Werkstücken umfasst ein Gehäuse mit einer Halteanordnung für ein zu bearbeitendes Werkstück sowie einer Abstützanordnung hierfür, die eine Vielzahl von in einer vom Gehäuse begrenzten Kammer aufgenommenen längsverschiebbaren Stiften aufweist. Letztere sind wahlweise gegen eine Längsverschiebung bezüglich des Gehäuses durch einen Klemmmechanismus festlegbar und dienen mit ihren Stiftenden dazu, das mit einer seiner Werkstückflächen über die Halteanordnung an der Aufnahme gehaltene Werkstück an der den Stiftenden zugewandten Werkstückfläche nach Maßgabe deren Geometrie flächig und fest abzustützen. Der Klemmmechanismus hat wenigstens ein Kraftübertragungselement, das durch fluidisch aufbringbare Kräfte bezüglich der Stifte bewegbar ist, um die Stifte wahlweise in einem unbetätigten, d.h. passiven Zustand der Aufnahme zu klemmen oder in einem betätigten, d.h. aktiven Zustand der Aufnahme freizugeben.

### BEZUGSZEICHENLISTE

- 10: Aufnahme
- 12: Werkstückspindel
- 14: Brillenlinse / optisches Werkstück
- 16: Werkstückfläche
- 18: Werkstückfläche
- 20: Werkstückrand
- 22: Halteanordnung
- 24: Abstützanordnung
- 26: Gehäuse
- 28: Kammer
- 30: Membran
- 32: Aufnahmeabschnitt
- 34: Außenseite
- 36: Perforation
- 38: Stift
- 40: Klemmmechanismus
- 42: Stiftende
- 44: Kraftübertragungselement
- 46: Basis
- 48: Deckel
- 50: Befestigungsabschnitt
- 52: Bodenabschnitt
- 54: Kammerabschnitt
- 56: Flanschabschnitt
- 58: Halteabschnitt
- 60: Begrenzungsabschnitt / Begrenzungsplatte
- 62: Befestigungsabschnitt
- 63: Spannschelle
- 64: Faltenbalgabschnitt
- 66: Innenseite
- 68: Aktuator / Kolben-Zylinder-Anordnung
- 70: Zylindergehäuse
- 72: Kolben
- 73: Entlüftungsschraube
- 74: Zylinderraum
- 75: Durchgang
- 76: Durchgang
- 78: Festkörpergelenk
- 80: Doppel-Arm
- 82: Grundplatte
- 84: Anlagefläche
- 86: hexagonale Öffnung
- 88: Klemmbereich
- 90: Druckspeicher
- 92: Kolben-Zylinder-Anordnung
- 94: Zylinderraum
- 96: Kolben
- 98: Federmechanismus
- 100: Betätigungsfortsatz
- 102: Schubstange
- 104: Tellerfeder
- 106: Gegenlager
- 108: Stellmechanismus
- 110: Konterscheibe
- 112: Außengewinde
- 114: Innengewinde
- 116: Anschlag
- 118: erste Madenschraube
- 120: Gewindebohrung
- 122: zweite Madenschraube
- 124: Luftfederelement
- 126: Balgabschnitt
- 128: Befestigungsabschnitt
- 130: Ringteil
- 132: Ringteil
- 134: Klemmabschnitt
- 136: Magnetkupplung
- 138: Flanschring
- 140: Permanentmagnet
- 142: Ringnut
- 144: Ringteil
- 146: Schnittstelle für Vakuum
- 148: Schnittstelle für Druckluft

- DQ: Druckluftquelle
- ECU: Steuerung
- EJ: Ejektor
- MA: Mittelachse
- PV: Proportionalventil
- V1: Schaltventil
- V2: Schaltventil
- V3: Schaltventil
- V4: Schaltventil

## Patentansprüche

1. Aufnahme (10) für die Bearbeitung von optischen Werkstücken (14), insbesondere Brillenlinsen, die jeweils zwei Werkstückflächen (16, 18) und einen Werkstückrand (20) dazwischen aufweisen, umfassend ein Gehäuse (26) mit einer Halteanordnung (22) für ein zu bearbeitendes Werkstück (14) sowie einer Abstützanordnung (24) hierfür, die eine Vielzahl von in einer vom Gehäuse (26) begrenzten Kammer (28) aufgenommenen, mindestens zum Großteil separat längsverschiebbaren Stiften (38) aufweist, welche wahlweise gegen eine Längsverschiebung bezüglich des Gehäuses (26) durch einen Klemmmechanismus (40) festlegbar sind und mit ihren Stiftenden (42) dazu dienen, das mit einer seiner Werkstückflächen (16, 18) über die Halteanordnung (22) an der Aufnahme (10) gehaltene Werkstück (14) an der den Stiftenden (42) zugewandten Werkstückfläche (16) nach Maßgabe deren Geometrie flächig und fest abzustützen, wobei der Klemmmechanismus (40) wenigstens ein Kraftübertragungselement (44) hat, das durch fluidisch aufbringbare Kräfte bezüglich der Stifte (38) bewegbar ist, um die Stifte (38) wahlweise in einem unbetätigten Zustand der Aufnahme (10) zu klemmen oder in einem betätigten Zustand der Aufnahme (10) freizugeben.

2. Aufnahme (10) nach Anspruch 1, wobei dem wenigstens einen Kraftübertragungselement (44) ein hydraulisch beaufschlagbarer Aktuator (68) zugeordnet ist, um wahlweise eine Querbewegung des Kraftübertragungselements (44) bezüglich der Stifte (38) zu generieren.

3. Aufnahme (10) nach Anspruch 2, wobei das wenigstens eine Kraftübertragungselement (44) durch hydraulische Beaufschlagung des Aktuators (68) bezüglich des Gehäuses (26) der Aufnahme (10) gegen eine elastische Rückstellkraft auslenkbar ist, um die Stifte (38) zu klemmen.

4. Aufnahme (10) nach Anspruch 2 oder 3, wobei es sich bei dem hydraulisch beaufschlagbaren Aktuator um eine Kolben-Zylinder-Anordnung (68) mit einem Zylindergehäuse (70) und wenigstens einem Kolben (72) handelt.

5. Aufnahme (10) nach Anspruch 4,
wobei der wenigstens eine Kolben (72) der Kolben-Zylinder-Anordnung (68) am Gehäuse (26) der Aufnahme (10) befestigt ist, so dass das Zylindergehäuse (70) der Kolben-Zylinder-Anordnung (68) relativ zum Gehäuse (26) der Aufnahme (10) bewegbar ist, und/oder
wobei der wenigstens eine Kolben (72) der Kolben-Zylinder-Anordnung (68) mit einem Durchgang (76) zur hydraulischen Beaufschlagung der Kolben-Zylinder-Anordnung (68) versehen ist und/oder
wobei das Zylindergehäuse (70) der Kolben-Zylinder-Anordnung (68) zwei Zylinderräume (74) aufweist, in denen jeweils ein Kolben (72) am Umfang abgedichtet aufgenommen ist, und/oder
wobei das Zylindergehäuse (70) der Kolben-Zylinder-Anordnung (68) über wenigstens ein Festkörpergelenk (78), das in der Art einer Parallelogrammführung einen Doppel-Arm (80) besitzt, elastisch auslenkbar am Gehäuse (26) der Aufnahme (10) angebracht ist.

6. Aufnahme (10) nach Anspruch 4 oder 5,
wobei das Kraftübertragungselement (44) integraler Bestandteil des Zylindergehäuses (70) ist und/oder
wobei das Kraftübertragungselement (44) eine ebene Anlagefläche (84) für die Stifte (38) aufweist und vom Zylindergehäuse (70) in die Kammer (28) hinein vorsteht.

7. Aufnahme (10) nach einem der Ansprüche 2 bis 6, wobei der Aktuator (68) im unbetätigten Zustand der Aufnahme (10) über einen Druckspeicher (90) druckbeaufschlagt ist, der im betätigten Zustand der Aufnahme (10) druckentlastet ist.

8. Aufnahme (10) nach Anspruch 7,
wobei der Druckspeicher (90) im Gehäuse (26) der Aufnahme (10) integriert ist und/oder
wobei der Druckspeicher (90) eine Kolben-Zylinder-Anordnung (92) aufweist, mit einem Zylinderraum (94) und einem in den Zylinderraum (94) hinein zur Druckerzeugung über einen Federmechanismus (98) federvorgespannten Kolben (96), der zur Druckentlastung gegen die Federvorspannung im Zylinderraum (94) mechanisch verschiebbar ist.

9. Aufnahme (10) nach Anspruch 8,
wobei der Federmechanismus (98) zur Federvorspannung des Kolbens (96) des Druckspeichers (90) in Reihe angeordnete Tellerfedern (104) aufweist und/oder
wobei die Federvorspannung des Kolbens (96) des Druckspeichers (90) am Federmechanismus (98) einstellbar ist und/oder
wobei zur Einstellung der Federvorspannung des Kolbens (96) der Druckspeicher (90) einen Stellmechanismus (108) aufweist, über den am Federmechanismus (98) ein Federweg stufenlos vorgebbar ist, und/oder
wobei der Druckspeicher (90) einen einstellbaren Anschlag (116) für den Kolben (96) seiner Kolben-Zylinder-Anordnung (92) hat, der eine mechanische Verschiebung des Kolbens (96) gegen den Federmechanismus (98) bezüglich des Gehäuses (26) der Aufnahme (10) begrenzt.

10. Aufnahme (10) nach einem der Ansprüche 2 bis 9,
wobei der Klemmmechanismus (40) eine Mehrzahl von Kraftübertragungselementen (44) aufweist, die die Stifte (38) in der Kammer (28) in symmetrischer Anordnung umgeben und denen jeweils ein hydraulisch beaufschlagbarer Aktuator (68) zugeordnet ist, und/oder
wobei der Klemmmechanismus (40) eine Mehrzahl von Aktuatoren (68) besitzt, die hydraulisch miteinander kommunizieren, so dass die Aktuatoren (68) gemeinsam hydraulisch beaufschlagbar sind.

11. Aufnahme (10) nach einem der vorhergehenden Ansprüche, wobei die Abstützanordnung (24) eine an dem Gehäuse (26) der Aufnahme (10) montierte, zusammen mit dem Gehäuse (26) die Kammer (28) begrenzende, gummielastische Membran (30) hat, welche einen Aufnahmeabschnitt (32) besitzt, auf dessen Außenseite (34) das Werkstück (14) mit einer seiner Werkstückflächen (16, 18) flächig auflegbar ist, wobei im Aufnahmeabschnitt (32) der gummielastischen Membran (30) eine Perforation (36) als Bestandteil der Halteanordnung (22) ausgebildet ist, so dass ein an der Kammer (28) angelegtes Vakuum über die Perforation (36) auf der Außenseite (34) des Aufnahmeabschnitts (32) der gummielastischen Membran (30) zum Halten eines zu bearbeitenden Werkstücks (14) ansteht.

12. Aufnahme (10) nach einem der vorhergehenden Ansprüche,
wobei die längsverschiebbaren Stifte (38) der Abstützanordnung (24) in einer Richtung weg vom Gehäuse (26) der Aufnahme (10) federvorgespannt sind und/oder
wobei die längsverschiebbaren Stifte (38) der Abstützanordnung (24) mit Hilfe wenigstens eines Luftfederelements (124) in einer Richtung weg vom Gehäuse (26) der Aufnahme (10) federvorgespannt sind.

13. Aufnahme (10) nach Anspruch 12,
wobei das Luftfederelement (124) einen gummielastischen Balgabschnitt (126) hat, der an einem starren Befestigungsabschnitt (128) vorzugsweise lösbar gehalten ist, welcher über eine Magnetkupplung (136) an einem gehäusefesten Teil (138) der Aufnahme (10) lösbar befestigt ist, und/oder
wobei dem Luftfederelement (124) ein Ringteil (144) zugeordnet ist, das einen gummielastischen, im Wesentlichen kreisscheibenförmigen, hohlen Balgabschnitt (126) des Luftfederelements (124) außenumfangsseitig schützend umgibt und eine Auslenkung des Balgabschnitts (126) nach radial außen begrenzt.

14. Aufnahme (10) nach einem der vorhergehenden Ansprüche,
wobei die Stifte (38) der Abstützanordnung (24) im Gehäuse (26) der Aufnahme (10) in einer im Wesentlichen hexagonalen Packung angeordnet sind, wozu sechs Kraftübertragungselemente (44) eine im Wesentlichen hexagonale Öffnung (86) begrenzen, durch die sich die Stifte (38) hindurch erstrecken, und/oder
wobei es sich bei den längsverschiebbaren Stiften (38) der Abstützanordnung (24) um Zylinderstifte handelt, mit jeweils einem abgesetzten, durchmessergrößten Klemmbereich (88) zur Klemmung mittels des Klemmmechanismus (40), wobei die Stifte (38) mit ihren Klemmbereichen (88) linienförmig aneinander anliegen und/oder die Klemmbereiche (88) der Stifte (38) einen Außendurchmesser zwischen 1,0 mm und 10,0 mm, vorzugsweise zwischen 2,0 mm und 6,0 mm und besonders bevorzugt zwischen 2,5 mm und 5,0 mm aufweisen, und/oder
wobei sich die längsverschiebbaren Stifte (38) der Abstützanordnung (24) mit ihren Stiftenden (42) durch wenigstens eine gelochte Begrenzungsplatte (60) hindurch erstrecken, die eine Längsbewegung der Stifte (38) im Gehäuse (26) der Aufnahme (10) begrenzt.

15. Aufnahme (10) nach einem der vorhergehenden Ansprüche,
wobei das Gehäuse (26) der Aufnahme (10) einen Befestigungsabschnitt (50) zur auswechselbaren Befestigung an einer Werkstückspindel (12) hat und/oder
wobei das Gehäuse (26) der Aufnahme (10) Schnittstellen (146, 148) zur Versorgung der Aufnahme (10) mit Vakuum und Druckluft über eine Werkstückspindel (12) aufweist.
